# EUROPEAN PATENT APPLICATION

(11) **EP 3 647 044 A1**
(43) Date of publication of application: **06.05.2020**
(21) Application number: 18824438.8
(22) Date of filing: 27.06.2018
(51) Int. Cl.: B32B 3/04

(54) **BOARD**

(30) Priority: 27.06.2017 JP 2017125398; 20.10.2017 JP 2017204066
(71) Applicant: Gifu Plastic Industry Co., Ltd., Gifu-shi, Gifu 500-8721 (JP)
(72) Inventor: OHARA, Kazuya, Gifu-shi Gifu 500-8721 (JP); OYA, Takayoshi, Gifu-shi Gifu 500-8721 (JP)
(74) Representative: Banzer, Hans-Jörg
(86) International application number: PCT/JP2018/024371
(87) International publication number: WO 2019/004285

(57) **Abstract**

A hollow board includes a core layer, a first skin layer, and a second skin layer. The core layer is made of plastic and includes a first surface, a second surface, and partition walls that define cells. The first skin layer is stacked on the first surface of the core layer. The second skin layer is stacked on the second surface of the core layer. The board includes side edge including a compressed portion in which the core layer is compressed in a thickness direction, and an end face formed by bending at least one of the first skin layer and the second skin layer toward the other skin layer at the side edge. The compressed portion is provided between the first skin layer and the second skin layer at the end face. The inclination angle of the end face is greater than or equal to 70 degrees.

## Description

### TECHNICAL FIELD

The present invention relates to a board.

### BACKGROUND ART

A hollow board made of plastic is lightweight and excels in handling property. Therefore, the hollow board may be used as a shelf board. The shelf board is used, for example, as a display shelf for displaying books, accessories or the like, or a storage box for storing books, shoes or the like. Patent Document 1 describes assembling a shelf board made of a hollow board to a box-shaped frame body and using it as a display shelf or an organizing shelf. As shown in Fig. 16A, the shelf disclosed in Patent Document 1 includes two rectangular frame-shaped frame bodies 101, and each frame body 101 has two inner walls 102 arranged to face each other. The two inner walls have stages of recessed groove-like supporting portions 300 at positions facing each other. When the shelf board 200 is slid on the two supporting portions 300 arranged facing each other and a side edge 201 of the shelf board 200 is inserted into the supporting portion 300, the side edge 201 of the shelf board 200 is supported by the supporting portion 300. The shelf board 200 is thereby assembled to a predetermined position of the frame body 101.

Patent Document 2 describes assembling a shelf board made of a board to a box-shaped frame body and using it as a storage box for storing shoes and the like. The shelf board made of plastic disclosed in Patent Document 2 is formed in a rectangular plate shape including an upper plate portion, a lower plate portion, a front plate portion, and a back plate portion. The shelf board is attached to a predetermined position in the storage box by locking a dowel receiving recess of the lower plate part to a dowel protuberance projecting from the inner surface of the storage box. Moreover, the dowel protuberance is formed over a stages, and the position of the shelf board in the storage box can be appropriately changed by changing the position of the dowel protuberance for locking the lower plate portion.

### PRIOR ART DOCUMENTS

### Patent Documents

Patent Document 1: Japanese Laid-Open Utility Model Publication No. 63-103436
Patent Document 2: Japanese Laid-Open Patent Publication No. 9-10061

### SUMMARY OF THE INVENTION

### Problems that the Invention is to Solve

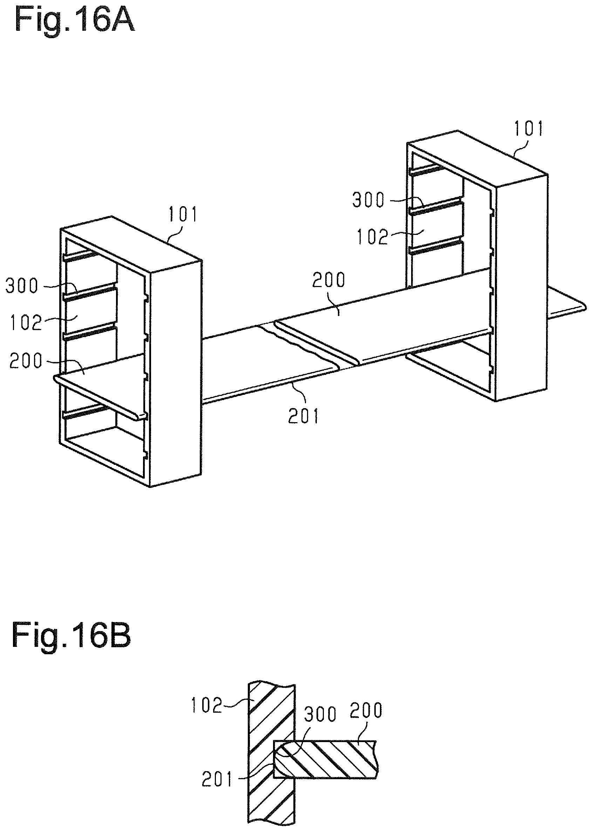

As shown in Fig. 16B, the supporting portion 300 of the frame body 101 is formed as a recessed groove having a square cross-section, and the side edge 201 of the shelf board 200 supported by the supporting portion 300 has an arcuate cross-section. Therefore, a gap forms between the side edge 201 of the shelf board 200 and the supporting portion 300, and foreign matters such as trash or dust tends to accumulate in the gap. Furthermore, since the side edge 201 has an arcuate cross-section, if the depth of the recessed groove, which is the supporting portion 300, is shallow, the end of the side edge 201 is not easily held in the recessed groove, and the shelf board 200 cannot be stably supported.

Furthermore, when changing the position of the shelf board, the shelf board may be accidentally dropped. Since the conventional shelf board has a square plate shape, if the corner portion of the shelf board hits the floor at the time of dropping, the impact may concentrate at the corner portion and the corner portion may deform.

### Means for Solving the Problems

In accordance with one aspect of the present disclosure, a hollow board is provided that includes a core layer, a first skin layer, and a second skin layer. The core layer is made of plastic that includes a first surface, a second surface opposite to the first surface, and a plurality of partition walls extending between the first surface and the second surface to define a plurality of cells. The first skin layer is stacked on the first surface of the core layer. The second skin layer is stacked on the second surface of the core layer. The board includes a side edge including a compressed portion in which the core layer is compressed in a thickness direction, and an end face formed by bending at least one of the first skin layer and the second skin layer toward the other skin layer at the side edge. The compressed portion is provided between the first skin layer and the second skin layer at the end face. An inclination angle of the end face is greater than or equal to 70 degrees.

In accordance with another aspect of the present disclosure, a polygonal plate-shaped board that includes a core layer and two skin layers is provided. The core layer includes a foam or a hollow body with a plurality of cells. The two skin layers are stacked on opposite surfaces of the core layer. The board includes a plurality of side edges including a compressed portion in which the core layer is compressed in a thickness direction, an end face formed by bending one of the two skin layers toward the other skin layer at each of the side edges, and a corner portion where the two side edges intersect. The compressed portion is provided between the two skin layers at the end face. The corner portion includes a flat portion in which the compressed portion is formed wider than a portion of the side edge excluding the corner portion.

In accordance with another aspect of the present disclosure, a polygonal plate-shaped board that includes a core layer and two skin layers is provided. The core layer includes a foam or a hollow body with a plurality of cells. The two skin layers are stacked on opposite surfaces of the core layer. The board includes a plurality of side edges including a compressed portion in which the core layer is compressed in a thickness direction, an end face formed by bending one of the two skin layers toward the other skin layer at each side edge, and a corner portion where the two side edges intersect. The corner portion includes a flat portion in which a thickness is thinner than a portion of the side edge excluding the corner portion. The flat portion is formed by compressing the core layer and at least one of the two skin layers in a thickness direction.

### BRIEF DESCRIPTION OF THE DRAWINGS

Fig. 1A is a perspective view of a storage box in which a board according to a first embodiment is employed as a shelf board.
Fig. 1B is a cross-sectional view taken along line α-α of the shelf board of Fig. 1A.
Fig. 2A is a perspective view showing a cross section taken along line α-α of the shelf board of Fig. 1A.
Fig. 2B is a cross-sectional view taken along line β-β of the shelf board of Fig. 1A.
Fig. 3A is a perspective view of a core layer provided in the shelf board according to the first embodiment.
Fig. 3B is a cross-sectional view taken along line γ-γ in Fig. 3A.
Fig. 3C is a cross-sectional view taken along line δ-δ in Fig. 3A.
Fig. 4A is a perspective view of a sheet material constituting the core layer of Fig. 3A.
Fig. 4B is a perspective view showing a state in the middle of folding the sheet material of Fig. 4A.
Fig. 4C is a perspective view showing a state in which the sheet material of Fig. 4B is folded.
Figs. 5A to 5F are diagrams explaining a method for manufacturing the shelf board of Fig. 1B.
Figs. 6A and 6B are cross-sectional views showing a part of a modification of the shelf board of Fig. 1B.
Fig. 7 is a perspective view of a storage box in which a board of a second embodiment is employed as a shelf board.
Fig. 8 is an overall perspective view of the shelf board of Fig. 7.
Fig. 9 is a partial perspective view of the shelf board of Fig. 7.
Fig. 10 is a diagram describing a corner portion of the shelf board of Fig. 7.
Fig. 11A is a cross-sectional view taken along the line γ-γ in Fig. 10.
Fig. 11B is a cross-sectional view taken along the line σ-σ in Fig. 5.
Figs. 12A, 12B, 12C, and 12D are diagrams describing a method of manufacturing the shelf board of Fig. 7.
Fig. 13 is a modification of a corner portion of the shelf board of Fig. 7.
Fig. 14 is a modification of a corner portion of the shelf board of Fig. 7.
Figs. 15A and 15B are modifications of the side edge of the shelf board of Fig. 7.
Fig. 16A is a perspective view of a display shelf in which a conventional shelf board is employed.
Fig. 16B is a cross-sectional view showing a state in which a conventional shelf board is supported by a supporting portion.

### MODES FOR CARRYING OUT THE INVENTION

### First Embodiment

A board according to a first embodiment, for example, is used as a shelf board of a storage box for storing books, shoes, or the like.

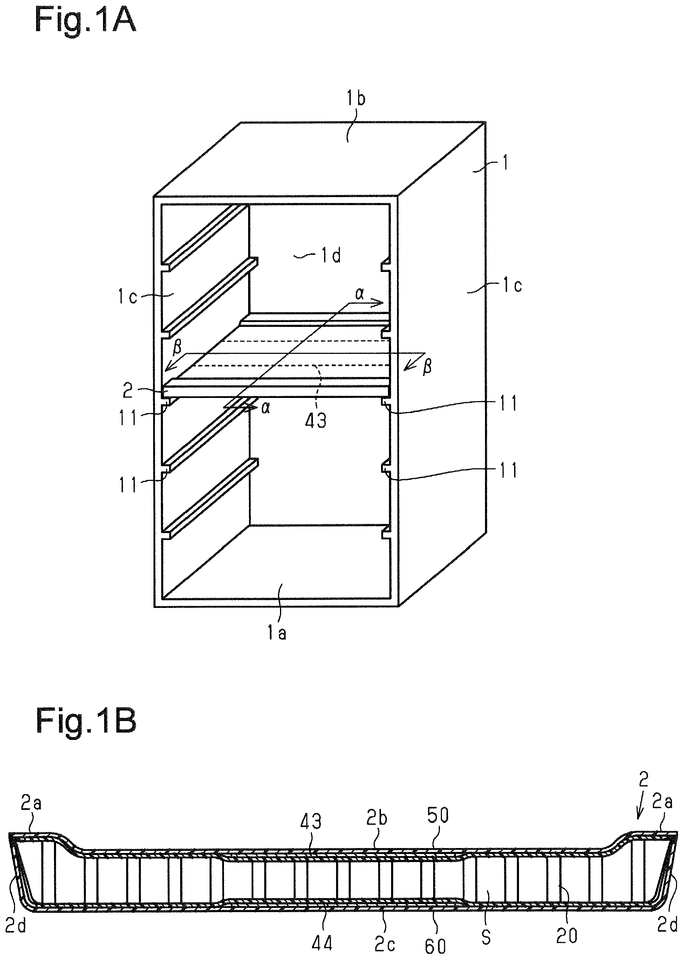

As shown in Fig. 1A, the storage box includes a storage box body 1 having a bottom wall 1a, an upper wall 1b, two side walls 1c, 1c, and a back wall 1d, and a shelf board 2 having a rectangular plate shape. The two side walls 1c and 1c are arranged to face each other. The two side walls 1c, 1c have supporting portions 11 projecting inward from the respective inner surfaces facing each other. The supporting portions 11 extend in the width direction of the side wall 1c and are arranged in the vertical direction.

As shown in Fig. 1A, the length of the long side of the shelf board 2 is slightly shorter than the length between the opposing inner surfaces of the two side walls 1c, 1c. The length of the short side of the shelf board 2 is slightly shorter than the width of the side wall 1c. The shelf board 2 is attached to a predetermined position of the storage box body 1 by placing both ends in the longitudinal direction of the shelf board 2 having such a shape on the two supporting portions 11 arranged facing each other in the storage box body 1. The shelf board 2 thereby partitions the internal space of the storage box body 1 into spaces.

As shown in Fig. 1B, the shelf board 2 has an entirely smooth lower surface 2c, two upper surfaces 2a extending over the entire length in the longitudinal direction, and a recessed surface 2b. The two upper surfaces 2a are opposite end portions in the transverse direction of the surface on the upper side of the shelf board 2. The recessed surface 2b is recessed downward with respect to the two upper surfaces 2a, and extends over the entire length in the longitudinal direction of the shelf board 2 between the two upper surfaces 2a. The upper surface 2a is a smooth surface. Furthermore, the recessed surface 2b has two slopes continuing to the two upper surfaces 2a, respectively, and the central portion located between the two slopes is a smooth surface. The shelf board 2 further has four end faces 2d, and the four end faces 2d are steep slopes inclined so as to spread upward toward the outer side from the shelf board 2.

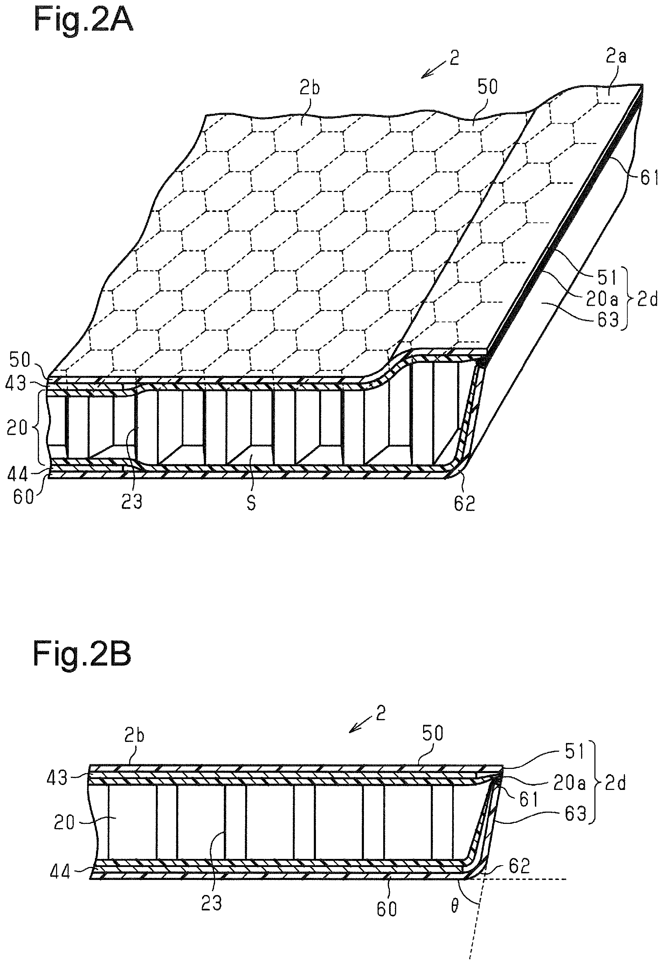

As shown in Figs. 1B and 2A, the shelf board 2 includes a rectangular plate-shaped core layer 20 made of thermoplastic, rectangular thin plate-shaped steel plates 43 and 44, and first and second skin layers 50, 60 made of thermoplastic. The core layer 20 includes a first surface (upper surface), a second surface (lower surface) on a side opposite to the first surface, and cells S arranged between the first surface and the second surface. The steel plates 43 and 44 are joined to a part of the upper surface and a part of the lower surface of the core layer 20, respectively. The first skin layer 50 is stacked so as to come into contact with the upper surface of the steel plate 43 and covers the entire first surface of the core layer 20. The second skin layer 60 is stacked so as to come into contact with the lower surface of the steel plate 44 and covers the entire second surface of the core layer 20. As shown in Figs. 1A and 1B, the steel plates 43 and 44 are arranged at a substantially central portion in the transverse direction of the shelf board 2, and are extended over the entire length in the longitudinal direction of the shelf board 2 so as to reach the opposite ends of the shelf board 2 in the longitudinal direction.

As shown in Fig. 2A, the core layer 20 is not compressed at the portion corresponding to the upper surface 2a of the shelf board 2. On the other hand, at the portion corresponding to the smooth surface of the recessed surface 2b, the core layer 20 is slightly thinner in the thickness direction than the upper surface 2a. Specifically, the cells S included in the core layer 20 at the portion corresponding to the recessed surface 2b are such that a partition wall 23, to be described later, is buckled or tilted, or a part of the thermoplastic forming the core layer 20 is melted and hardened. Furthermore, all the side edges (four sides in the present embodiment) of the shelf board 2 include a compressed portion 20a in which the core layer 20 is compressed in the thickness direction. In this description, the "compressed portion 20a" is a portion where all the thermoplastic forming the core layer 20 is melted and integrated by press molding in a molding step, to be described later, and the cell S constituting the core layer 20 is deformed to such an extent that the shape of the partition wall 23 cannot be identified.

As shown in Figs. 2A and 2B, the second skin layer 60 is bent toward the compressed portion 20a of the core layer 20 at all side edges of the shelf board 2. Furthermore, the first skin layer 50 is extended horizontally without being bent at any of the side edges of the shelf board 2. The end edge 51 of the first skin layer 50 and the end edge 61 of the second skin layer 60 are abutted with each other with the compressed portion 20a of the core layer 20 interposed therebetween.

As shown in Fig. 2B, the second skin layer 60 includes a flat part that constitutes the lower surface of the shelf board 2, and a curved portion 62 having an arcuate cross-section that is bent from the flat part. The curvature radius of the curved portion 62 is about 1 to 5 mm. A portion of the second skin layer 60 extending from the curved portion 62 toward the end edge 61 constitutes an end face 63 that covers the core layer 20 from the side. An inclination angle θ of the end face 63 with respect to the lower surface of the second skin layer 60 may be greater than or equal to 70 degrees. The inclination angle θ is more preferably greater than or equal to 80 degrees, and further preferably greater than or equal to 85 degrees. As the inclination angle approaches 90 degrees, foreign matter such as trash or dust is less likely to accumulate between the shelf board 2 and the supporting portion 11, and the shelf board 2 can be stably supported by the supporting portion 11. Therefore, the inclination angle θ is preferably 70 ° ≤ θ < 90.

In the shelf board 2 of the first embodiment, only the second skin layer 60 is bent over the entire length of the side edge, the end face 63 of the second skin layer 60, the compressed portion 20a of the core layer 20, and the end edge 51 of the first skin layer 50 configure the end face 2d of the shelf board 2. Therefore, the inclination angle of the end face 2d of the shelf board 2 in the first embodiment is the same as the inclination angle of the end face 63 of the skin layer 60. The end face 63 is preferably a flat surface, but may be a curved surface. When the end face 63 is a curved surface, the inclination angle of the end face 2d indicates the inclination angle of an imaginary plane connecting the end closer to the end edge 61 of the curved portion 62 and the end edge 61.

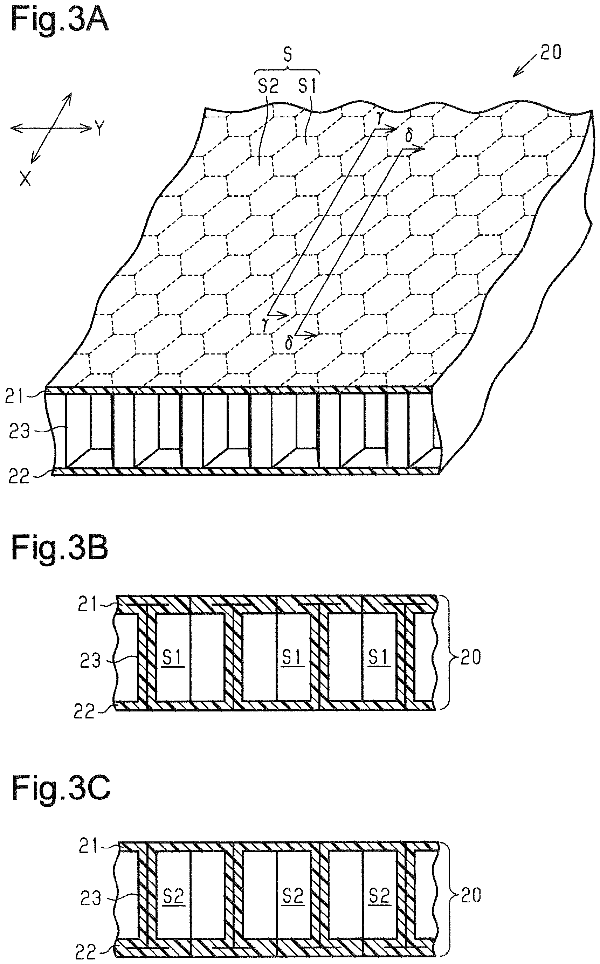

As shown in Fig. 3A, the core layer 20 is formed by folding a single sheet material made of thermoplastic formed into a predetermined shape. The core layer 20 includes a first outer wall 21, a second outer wall 22, and partition walls 23 extending between the first outer wall 21 and the second outer wall 22. The six partition walls, the first outer wall 21 and the second outer wall 22 define a hexagonal prism-shaped cell S. As will be described below, the first outer wall 21 and the second outer wall 22 of the core layer have a structure in which a one-layer structure and a two-layer structure are mixed, but in Figs. 1B, 2, and 3A, the first outer wall 21 and the second outer wall 22 of the core layer 20 are shown in a one-layer structure.

As shown in Figs. 3B and 3C, the cells S defined inside the core layer 20 include a first cell S1 and a second cell S2 having different configurations. As shown in Fig. 3B, in the first cell S1, the first outer wall 21 having a two-layer structure is provided at the upper part of the partition wall 23. The two layers of the first outer wall 21 having the two-layer structure are joined to each other. Furthermore, an opening (not shown) is formed in the first outer wall 21 having a two-layer structure due to thermal contraction of the thermoplastic when the core layer 20 is molded. In the first cell S1, a second outer wall 22 having a single layer structure is provided at the lower part of the partition wall 23.

On the other hand, as shown in Fig. 3C, in the second cell S2, the first outer wall 21 having a one-layer structure is provided at the upper part of the partition wall 23. In the second cell S2, the second outer wall 22 having a two-layer structure is provided at the lower part of the partition wall 23. The two layers of the second outer wall 22 having the two-layer structure are joined to each other. Furthermore, an opening (not shown) is formed in the second outer wall 22 having a two-layer structure due to thermal contraction of the thermoplastic when the core layer 20 is molded.

As shown in Figs. 3B and 3C, the adjacent first cells S1 and the adjacent second cells S2 are defined by the partition walls 23 having a two-layer structure, respectively. The partition walls 23 having the two-layer structure have a portion that is not thermally welded to each other at the central part in the thickness direction of the core layer 20. Therefore, the internal space of each cell S of the core layer 20 communicates with the internal space of another cell S through the space between the partition walls 23 having a two-layer structure. In Figs. 3B and 3C, the leftmost cell S among the cells S shown in the figure is represented by the reference sign, but the same applies to the other cells S.

As shown in Fig. 3A, the first cells S1 are arranged side by side so as to form a row along the X direction. Similarly, the second cells S2 are arranged side by side so as to form a row the X direction. The row of first cells S1 and the row of second cells S2 are alternately arranged in the Y direction orthogonal to the X direction. The core layer 20 has a honeycomb structure as a whole by the first cells S1 and the second cells S2.

The thermoplastic that constitutes the core layer 20 may be any conventionally known thermoplastic, such as polypropylene plastic, polyamide plastic, polyethylene plastic, acrylonitrile-butadiene-styrene copolymer plastic, acrylic plastic, or polybutylene terephthalate plastic. The core layer 20 of the first embodiment is made of polypropylene plastic.

As shown in Fig. 2B, the steel plate 43 stacked on the first surface of the core layer 20 is joined to the core layer 20 with an adhesive layer (not shown) made of thermoplastic (e.g., polypropylene plastic). The steel plate 43 extends to the end edge 51 of the first skin layer 50 or to the vicinity of the end edge 51 at the opposite ends in the longitudinal direction of the shelf board 2. Furthermore, the steel plate 44 stacked on the second surface of the core layer 20 is joined to the core layer 20 with an adhesive layer (not shown) made of thermoplastic. The steel plate 44 extends to the end of the curved portion 62 of the skin layer 60 at the opposite ends in the longitudinal direction of the shelf board 2. That is, the steel plate 44 is provided to extend along the flat part of the second skin layer 60 from the position in contact with the curved portion 62. The steel plates 43 and 44 are metal thin plates such as, aluminum alloy, iron alloy, copper alloy and the like. The thickness of the steel plates 43 and 44 is, for example, about 0.05 mm to several mm. In the first embodiment, the steel plate 43 and the steel plate 44 have the same configuration.

The first skin layer 50 is joined to the upper surface of the steel plate 43 (outer surface of the steel plate 43) with an adhesive layer (not shown) made of thermoplastic. Similarly, the skin layer 60 is joined to the lower surface of the steel plate 44 (outer surface of the steel plate 44) with an adhesive layer (not shown) made of thermoplastic. The thickness of the skin layers 50 and 60 is, for example, about 0.5 mm to several mm. The thermoplastic constituting the skin layers 50 and 60 may be any conventionally known thermoplastic, such as polypropylene plastic, polyamide plastic, polyethylene plastic, acrylonitrile-butadiene-styrene copolymer plastic, acrylic plastic, polybutylene terephthalate plastic or the like. The thermoplastic constituting the skin layers 50, 60 is preferably the same thermoplastic as the core layer 20, and the skin layers 50, 60 of the first embodiment are made of polypropylene plastic. Furthermore, in the first embodiment, the first skin layer 50 and the second skin layer 60 have the same thickness.

The operation of the shelf board 2 of the first embodiment will be described.

The entire lower surface 2c of the shelf board 2 is smooth. Therefore, when the shelf board 2 is placed on the supporting portion 11, the smooth lower surface 2c is stably supported by the upper surface of the supporting portion 11. Furthermore, two upper surfaces 2a extending in the longitudinal direction are formed at the opposite ends in the transverse direction at the upper part of the shelf board 2, and the recessed surface 2b recessed downward from the end edges of the two upper surfaces 2a is extended over the entire length in the longitudinal direction at the central portion in the transverse direction. Therefore, books or shoes placed on the recessed surface 2b of the shelf board 2 do not easily drop. Moreover, the end face 2d of the shelf board 2 is constituted by the end face 63 of the second skin layer 60, the compressed portion 20a of the core layer 20, and the end edge 61 of the first skin layer 50, and the inclination angle θ thereof is greater than or equal to 70 degrees. Therefore, a gap is less likely to form between the shelf board 2 and the inner surface of the side wall 1c of the storage box body 1 or between the shelf board 2 and the supporting portion 11. Furthermore, the ground contacting area between the upper surface of the supporting portion 11 and the lower surface 2c of the shelf board 2 is increased, and the shelf board 2 is stably supported on the supporting portion 11.

The steel plates 43 and 44 extending along the entire length in the longitudinal direction are joined to the substantially central portions in the transverse direction on the upper surface and the lower surface of the shelf board 2 up to the opposite ends in the longitudinal direction. The steel plates 43 and 44 reinforce the shelf board 2. Since the steel plates 43 and 44 are joined over the entire length in the longitudinal direction, deflection at a substantially central portion in the longitudinal direction of the shelf board 2 is suppressed. Furthermore, the opposite ends in the longitudinal direction of the shelf board 2 are reinforced, and the strength of the portion supported by the supporting portion 11 is improved. Moreover, the shelf board 2 is lighter than when the steel plates 43 and 44 are joined to the entire surface of the shelf board 2.

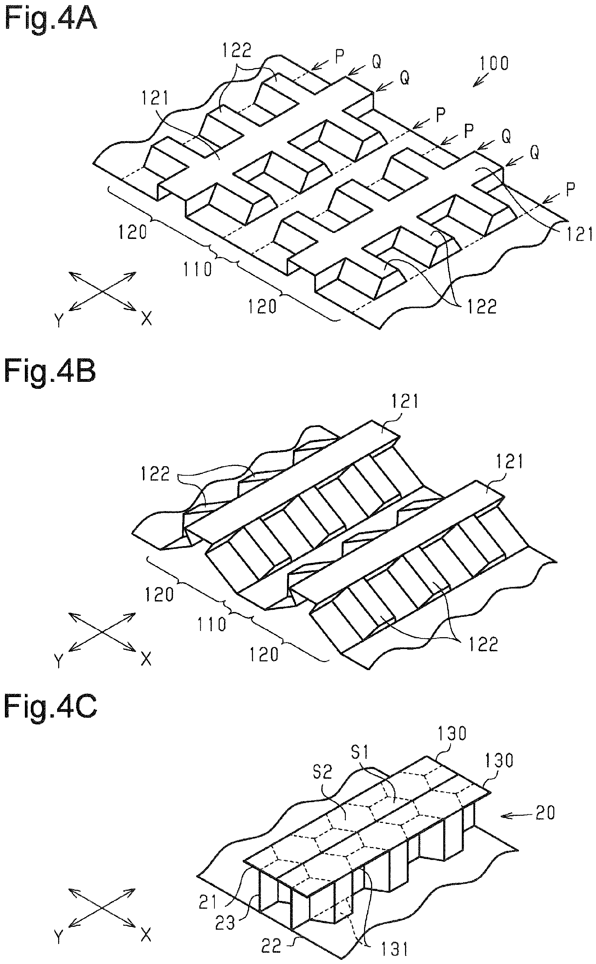

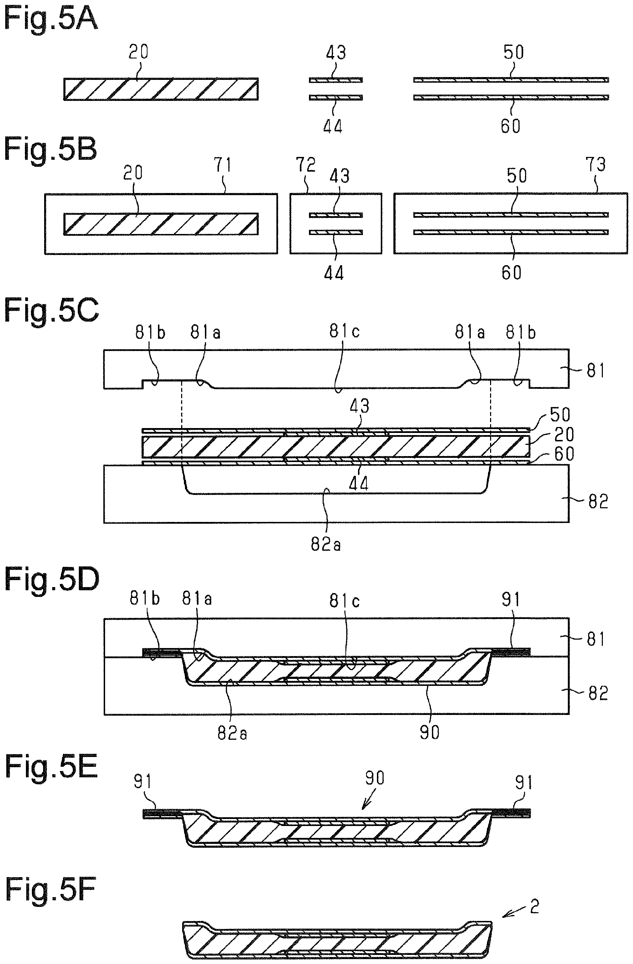

Next, a method for manufacturing the shelf board 2 will be described with reference to Figs. 4 and 5. The method of manufacturing the shelf board 2 may include a step of forming the core layer 20, a heating step of heating the core layer 20, the steel plates 43 and 44, and the skin layers 50 and 60, a joining step of joining the core layer 20, the steel plates 43 and 44, and the skin layers 50, 60, a molding step of molding the core layer 20, the steel plates 43, 44 and the skin layers 50, 60 to obtain an intermediate body 90, and a post-processing step of adjusting the shape of the end face of the intermediate body 90 to obtain the shelf board 2. In the first embodiment, the joining step of joining the steel plates 43, 44 and the skin layers 50, 60, and the molding step of molding the core layer 20, the steel plates 43, 44 and the skin layers 50, 60 to obtain the intermediate body 90 are simultaneously performed.

First, the step of forming the core layer 20 will be described. The core layer 20 is formed by folding the first sheet material 100.

As shown in Fig. 4A, the first sheet material 100 is formed by molding a single sheet of thermoplastic into a predetermined shape. In the first sheet material 100, a planar region 110 and a bulging region 120 having a band shape are alternately arranged in the longitudinal direction (X direction) of the first sheet material 100. In the bulging region 120, a first bulging portion 121 in which the first bulging portion 121 having a cross-section downward groove shape including an upper surface and a pair of side surfaces extends over the entire extending direction (Y direction) of the bulging region 120 is formed. The first bulging portion 121 has a bulging surface that bulges out from the planar region 110 and two connecting surfaces that intersect the bulging surface, and has a shape similar to a groove that opens downward. The bulging surface of the first bulging portion 121 may be orthogonal to the connecting surface. The width of the first bulging portion 121, that is, the length of the bulging surface in the transverse direction is equal to the width of the planar region 110, and is twice the bulging height of the first bulging portion 121, that is, the length of the connecting surface in the transverse direction.

Furthermore, the bulging region 120 is formed with second bulging portions 122 in which the cross-sectional shape has a trapezoidal shape obtained by bisecting the regular hexagonal shape with the longest diagonal line. The second bulging portions 122 are orthogonal to the first bulging portions 121. The bulging height of the second bulging portion 122 is set to be equal to the bulging height of the first bulging portion 121. Furthermore, the interval between two adjacent second bulging portions 122 is equal to the width of the bulging surface of the second bulging portion 122.

The first bulging portion 121 and the second bulging portion 122 are formed by partially bulging out the sheet upward using the plasticity of the sheet. The first sheet material 100 can also be molded from a single sheet through a known molding method such as a vacuum molding method, a compression molding method or the like.

As shown in Figs. 4A and 4B, the core layer 20 is formed by folding the first sheet material 100 configured as described above along the boundary lines P and Q. More specifically, the first sheet material 100 is valley-folded at the boundary line P between the planar region 110 and the bulging region 120, and is mountain-folded at the boundary line Q between the bulging surface and the connecting surface of the first bulging portion 121 to be compressed in the X direction. Subsequently, as shown in Figs. 4B and 4C, the bulging surface and the connecting surface of the first bulging portion 121 are folded, and the end face of the second bulging portion 122 and the planar region 110 are folded. Thus, one partition body 130 having a prismatic column shape extending in the Y direction with respect to one bulging region 120 is formed. The hollow plate-shaped core layer 20 is formed by forming such partition bodies 130 continuously in the X direction.

When the first sheet material 100 is compressed as described above, the portion corresponding to the bulging surface and the connecting surface of the first bulging portion 121 forms the first outer wall 21 of the core layer 20, and the portion corresponding to the end face of the second bulging portion 122 and the planar region 110 forms the second outer wall 22 of the core layer 20. As shown in Fig. 4C, a portion where the bulging surface and the connecting surface of the first bulging portion 121 in the first outer wall 21 are folded to form a two-layer structure, and a portion where the end face of the second bulging portion 122 and the planar region 110 in the second outer wall 22 are folded to form a two-layer structure both become an overlapping portion 131.

Moreover, the hexagonal column-shaped region that is defined by folding the second bulging portion 122 becomes the second cell S2, and the hexagonal column-shaped region that is defined between the two adjacent partition bodies 130 becomes the first cell S1. In the first embodiment, the bulging surface and the connecting surface of the second bulging portion 122 constitute the partition wall 23 of the second cell S2, and the connecting surface of the second bulging portion 122 and the planar portion located between the second bulging portions 122 in the bulging region 120 constitute the partition wall 23 of the first cell S1. Then, the contact portion between the bulging surfaces of the second bulging portion 122 and the contact portion between the planar portions in the bulging region 120 become the partition wall 23 having a two-layer structure. When performing the folding step, the first sheet material 100 may be softened by heating process.

Next, the heating step of heating the core layer 20, the steel plates 43 and 44, and the skin layers 50 and 60 will be described.

As shown in Fig. 5A, first, in order to prepare the core layer 20 to use for the shelf board 2, the core layer 20 manufactured through the method described above is cut into a shape larger than the shelf board 2. For example, the core layer 20 manufactured through the method described above is cut into a rectangular shape that is about 50 mm larger than the size of the shelf board 2 in the longitudinal direction and the transverse direction. In Fig. 5, the hollow structure of the core layer 20 is omitted.

The steel plates 43 and 44 used for the shelf board 2 are prepared by being cut such that the length of the long side is slightly shorter than the length of the long side of the shelf board 2, and the length of the short side is a length of about 1/3 to 1/2 of the length of the short side of the shelf board 2. An adhesive layer made of a thermoplastic (e.g., polypropylene plastic) is coated on both surfaces of each of the steel plates 43 and 44. The skin layers 50 and 60 used for manufacturing the shelf board 2 are cut into a shape larger than that of the shelf board 2, specifically, a size of about the same size as the core layer 20.

As shown in Fig. 5B, the core layer 20, the steel plates 43 and 44, and the skin layers 50 and 60 are respectively heated. When heating the core layer 20, the core layer 20 is placed in a heating furnace 71 set to a predetermined temperature and held for a predetermined time. Furthermore, when heating the steel plates 43 and 44, the steel plates 43 and 44 are placed in a heating furnace 72 set to a predetermined temperature and held for a predetermined time. Similarly for the skin layers 50, 60, the skin layers 50 and 60 are placed in a heating furnace 73 set at a predetermined temperature and held for a predetermined time. The temperatures in the heating furnaces 71, 72, 73 are set to an extent that the thermoplastic constituting the core layer 20 and the skin layers 50, 60 is melted. The temperature in the heating furnace 72 that heats the steel plates 43 and 44 is set higher than the temperature in the heating furnace 71 that heats the core layer and the temperature in the heating furnace 73 that heats the skin layers 50 and 60.

In the first embodiment, in the heating step, the surface temperature of the core layer 20 held in the heating furnace 71 is adjusted to vary depending on the part. For example, the surface temperature of the core layer 20 can be made different by installing a shielding material partially on the surface of the core layer 20. A hole is formed in the shielding material, and the surface temperature of the portion where the shielding material is installed can be adjusted to be lower than the temperature in the heating furnace 71 by adjusting the size and number of the hole. In addition, the surface temperature may be adjusted by installing the shielding material in which the hole is not formed.

Next, a method for adjusting the surface temperature of the core layer 20 by installing a shielding material will be described. In the core layer 20, a shielding material having a relatively small hole size and/or a shielding material having a relatively small number of holes is installed at the portion corresponding to the upper surface 2a and the portion corresponding to the lower surface 2c of the shelf board 2 manufactured through the steps described above. Furthermore, a shielding material having a relatively large hole size and/or a shielding material having a relatively large number of holes is installed at the portion corresponding to the recessed surface 2b of the shelf board 2. No shielding material is installed at other portions. Accordingly, with respect to the heating temperature in the heating furnace 71, the surface temperature of the portion corresponding to the upper surface 2a and the portion corresponding to the lower surface 2c of the shelf board 2 can be made relatively the lowest, the surface temperature of the portion corresponding to the recessed surface 2b of the shelf board 2 can be made relatively the second lowest, and the surface temperature of other portions can be made to the same extent as the heating temperature in the heating furnace 71. The other portion is a portion corresponding to the end face 2d of the shelf board 2 and is a portion corresponding to the compressed portion 91 of the intermediate body 90 to be described later.

Next, the joining step of joining the core layer 20, the steel plates 43 and 44, and the skin layers 50 and 60 and the molding step will be described. In the joining step and the molding step, the second skin layer 60, the steel plate 44, the core layer 20, the steel plate 43, and the first skin layer 50, which are sequentially stacked from the bottom, are referred to as a stacked body. In the joining step, the intermediate body 90 is manufactured by molding the stacked body.

As shown in Fig. 5C, a mold used in the joining step and the molding step includes an upper mold 81 and a lower mold 82. Figs. 5C to 5F are views as seen from the short side of the shelf board 2 to be manufactured. The upper mold 81 and the lower mold 82 of the first embodiment are held at room temperature without being entirely heated.

The lower mold 82 has a recess 82a that is recessed in a rectangular shape when viewed from above. The length in the longitudinal direction of the recess 82a is substantially the same as the length in the longitudinal direction of the shelf board 2, and the length in the transverse direction of the recess 82a is substantially the same as the length in the transverse direction of the shelf board 2. Furthermore, the depth of the recess 82a is substantially the same as the thickness of the recessed surface 2b of the shelf board 2. It is preferable to set the size of the recess 82a in consideration of the thermal contraction of the core layer 20, the steel plates 43 and 44, and the skin layers 50 and 60. Hereinafter, when forming each portion, it is preferable to consider the influence of heat contraction similarly.

The upper mold 81 has recesses 81a and 81b, which are grooves extending in a rectangular shape, when viewed from above. The depths of the recesses 81a and 81b are substantially the same as the thickness of the compressed portion 91 of the intermediate body 90 described later. The recess 81a is a portion for molding the upper surface 2a of the shelf board 2 in the molding step described later, and the recess 81b is a portion for molding the compressed portion 91 of the intermediate body 90. That is, as shown with a dotted line in Fig. 5C, the recess 81a is a portion located inward from the outer edge of the recess 82a of the lower mold 82 and the recess 81b is a portion located outward from the outer edge of the recess 82a of the lower mold 82 when the upper mold 81 and the lower mold 82 are clamped. Furthermore, a portion (referred to as a protuberance 81c for the sake of convenience) having a rectangular shape when viewed from above surrounded by the recesses 81a and 81b is a portion for molding the recessed surface 2b of the shelf board 2.

As shown in Fig. 5C, first, the heated core layer 20, the steel plates 43 and 44, and the skin layers 50 and 60 are placed on the lower mold 82 so as to cover the recess 82a in order of the skin layer 60, the steel plate 44, the core layer 20, the steel plate 43, and the skin layer 50 from below. The core layer 20, the steel plates 43 and 44, and the skin layers 50 and 60 thereby form a stacked body. The core layer 20 and the skin layers 50 and 60 of the stacked body are cut into a rectangular shape larger than the shelf board 2. Thus, in a state where the stacked body is placed on the lower mold 82, the four sides of the stacked body cover the outer edge of the recess 82a.

In the previous heating step, since the surface temperature of the core layer 20 is varied depending on the part, the stacked body is positioned with respect to the molds 81, 82 according to the surface temperature of the core layer 20 when mounting the stacked body. More specifically, the portion of the stacked body whose surface temperature is adjusted as the portion corresponding to the upper surface 2a of the shelf board 2 is aligned with the position of the recess 81a of the upper mold 81, and the portion of the stacked body whose surface temperature is adjusted as the portion corresponding to the recessed surface 2b of the shelf board 2 is aligned with the position of the protuberance 81c of the upper mold 81. That is, the stacked body is positioned according to the height of the space between the upper mold 81 and the lower mold 82 formed when the upper mold 81 and the lower mold 82 are clamped, where a portion of the stacked body adjusted relatively to the lowest surface temperature in the previous heating step is arranged in the recess 81a having the highest space height, and a portion of the stacked body adjusted to the highest surface temperature in the previous heating step is arranged in the recess 81b having the lowest space height. In other words, in the heating step, the surface temperature of the core layer 20 is adjusted according to the height of the space between the upper mold 81 and the lower mold 82 at the time of clamping.

In a state where the stacked body is placed on the lower mold 82, a part of the thermoplastic of the adhesive layer coated on the opposite surfaces of each of the heated steel plates 43 and 44 is in a state of being thermally melted. Thus, the core layer 20, the steel plates 43 and 44, and the skin layers 50 and 60 constituting the stacked body are positioned in a state of being temporarily joined on the lower mold 82.

Subsequently, the upper mold 81 is lowered toward the lower mold 82 and clamped therewith, and the stacked body is pressed, so that the joining step and the molding step are simultaneously performed. Suction holes (not shown) are formed in the upper mold 81 and the lower mold 82, and the molds 81, 82 can be closely attached in a state where the stacked body is positioned in the molds 81, 82 by performing suction through the suction holes at the time of clamping. The pressure and the press time at the time of pressing may be appropriately set.

In the heating step of the first embodiment, the temperature in the heating furnace 71 for heating the steel plates 43 and 44 is set to be higher than the temperature in the heating furnace 71 for heating the core layer and the temperature in the heating furnace 73 for heating the skin layers 50 and 60. Therefore, when the molds are clamped, the adhesive layers on the opposite surfaces of each of the steel plates 43 and 44 are thermally melted, and the heat of the steel plates 43 and 44 is propagated to the core layer 20 and the skin layers 50 and 60, so that a part of the thermoplastic is thermally melted. Therefore, the core layer 20, the steel plates 43 and 44, and the skin layers 50 and 60 are joined by the clamping of the molds 81 and 82. At this time, an opening is formed in the first outer wall 21 of the two-layer structure of the first cell S1 of the core layer 20 and the second outer wall 22 of the two-layer structure of the second cell S2, and the central part in the thickness direction of the core layer 20 has a portion where the partition walls 23 are not thermally welded to each other. Therefore, the air between the core layer 20 and the steel plates 43 and 44 and the skin layers 50 and 60 easily escapes from the openings in the first outer wall 21 and the second outer wall 22 of the core layer 20 and the gaps in the core layer 20. This makes it difficult for air to accumulate between the core layer 20, and the steel plates 43, 44 and the skin layers 50, 60, and the joining strength between the core layer 20, the steel plates 43, 44 and the skin layers 50, 60 increases.

Furthermore, as shown in Fig. 5D, the stacked body is molded into an inner surface shape of the upper mold 81 and the lower mold 82, that is, the shape of the recesses 81a, 81b, 82a and the protuberance 81c to become the intermediate body 90.

As shown in Fig. 5C, the recess 81b of the upper mold 81 faces the upper end face to become the outer side of the recess 82a of the lower mold 82 when the mold is clamped. Therefore, in the recess 81b, the height of the space between the upper mold 81 and the lower mold 82 at the time of clamping becomes the lowest. A portion adjusted so that the surface temperature becomes the highest in the heating step is arranged in the recess 81b. In this portion, the thermoplastic constituting the core layer 20 is melted and the core layer 20 is thermally compressed by clamping, whereby the compressed portion 91 of the intermediate body 90 is formed. In the compressed portion 91, the thermoplastic constituting the first outer wall 21, the second outer wall 22, and the partition wall 23 is melted and integrated.

The protuberance 81c of the upper mold 81 faces the recess 82a of the lower mold 82 when the mold is clamped. Thus, the space between the protuberance 81c and the recess 82a is a portion having a slightly high height in the space between the upper mold 81 and the lower mold 82 at the time of clamping. In this space, a portion adjusted so that the surface temperature becomes relatively low in the heating step is arranged. In this portion, due to clamping, a part of the thermoplastic constituting the core layer 20 is melted, and the core layer 20 becomes thin in the vertical direction. At this time, compared to the outer walls 21 and 22, heat is not easily transmitted to the partition wall 23 in the inside, and thus the partition wall 23 maintains its shape without being integrated with the outer walls 21 and 22, and the core layer 20 is not deformed.

The recess 81a of the upper mold 81 faces the recess 82a of the lower mold 82 when the mold is clamped. Thus, the space between the recess 81a and the recess 82a is a portion having the highest height of the space between the upper mold 81 and the lower mold 82 at the time of clamping. In this space, a portion adjusted so that the surface temperature becomes the lowest in the heating step is arranged. This portion has a shape in which the height dimension is maintained without the thermoplastic constituting the core layer 20 being melted and the core layer 20 being deformed in the vertical direction by the clamping.

Furthermore, when the core layer 20, the steel plates 43 and 44, and the skin layers 50 and 60 are pushed into the recess 82a of the lower mold 82 by clamping, the second skin layer 60 is bent toward the first skin layer 50, and the curved portion 62 is formed. At this time, the core layer 20 and the skin layers 50, 60 have the portion corresponding to the lower surface 2c and the portion corresponding to the upper surface 2a of the shelf board 2 adjusted to a lowest surface temperature, and other portions, that is, the portion corresponding to the end face 2d of the shelf board 2 and the portion corresponding to the compressed portion 91 of the intermediate body 90 adjusted to a highest surface temperature. Therefore, when the skin layer 60 located on the lower side is bent, the temperature difference between the portion corresponding to the lower surface 2c of the shelf board 2 and the portion corresponding to the end face 2d of the shelf board 2 increases and a difference forms in the melting extent of the thermoplastic, and the length of the curved portion 62 formed in the skin layer 60 becomes small. On the other hand, the first skin layer 50 is maintained in a horizontally extended state without being bent.

As shown in Fig. 5E, after separating the upper mold 81 from the lower mold 82 and cooling the intermediate body 90, the intermediate body 90 is taken out from the lower mold 82. The core layer 20 of the intermediate body 90 obtained through the joining step and the molding step has the steel plate 43 and the first skin layer 50 joined to the first surface, and the steel plate 44 and the second skin layer 60 joined to the second surface. The intermediate body 90 includes a compressed portion 91 formed over the entire periphery of the side edge of a portion having a size and shape corresponding to the shelf board 2.

The intermediate body 90 includes a curved portion 62 in which the second skin layer 60 is curved, and an end face 63 that covers the core layer 20 from the side. The second skin layer 60 extends horizontally from the upper edge of the end face 63. Furthermore, the first skin layer 50 is in a state of extending horizontally as a whole. In the compressed portion 91, the compressed portion 20a of the core layer 20 is interposed between the horizontally extending first skin layer 50 and second skin layer 60.

Next, a post-processing step of adjusting the shape of the end face of the intermediate body 90 will be described.

As shown in Fig. 5F, the compressed portion 91 formed on the intermediate body 90 is cut off with a cutting jig (not shown). Thus, for example, a part of the outer edge of the portion including the compressed cells in the first row of the core layer 20 is cut off. As shown in Figs. 2A and 2B, on the cut surface of the intermediate body 90, the compressed portion 20a of the core layer 20 is exposed between the end edge 51 of the first skin layer 50 and the end edge 61 of the second skin layer 60, and the end face 2d of the shelf board 2 is formed by the end edge 51 of the first skin layer 50, the end face 63 of the second skin layer 60, and the compressed portion 20a of the core layer 20. Thereafter, the cut surface of the intermediate body 90 is polished, painted, or the like to adjust the shape of the end face 2d. When a Thomson blade or a laser is used as a cutting jig for cutting the compressed portion 91, processes such as polishing and painting does not necessarily need to be performed.

The shelf board 2 is manufactured through the manufacturing steps described above.

Next, the operation of the method for manufacturing the shelf board 2 of the first embodiment will be described.

In the first embodiment, prior to the joining step, the core layer 20, the steel plates 43 and 44, and the skin layers 50 and 60 are heated to a predetermined temperature in the heating step. Therefore, a part of the thermoplastic of the adhesive layer coated on the opposite surfaces of each of the steel plates 43 and 44 is in a state of being thermally melted, and the core layer 20, the steel plates 43 and 44, and the skin layers 50 and 60 are easily positioned.

In the heating step of the first embodiment, the temperature in the heating furnace 71 for heating the steel plates 43 and 44 is set to be higher than the temperature in the heating furnace 71 for heating the core layer and the temperature in the heating furnace 73 for heating the skin layers 50 and 60. Therefore, the adhesive layers coated on the opposite surfaces of each of the steel plates 43 and 44 are thermally melted, and the heat of the steel plates 43 and 44 is propagated thus thermally melting a part of the thermoplastic constituting the core layer 20 and the skin layers 50 and 60, and the layers constituting the stacked body are joined to each other by clamping the molds 81 and 82.

In the heating step of the first embodiment, the surface temperature of the core layer 20 is adjusted to vary depending on the part by installing a shielding material. Therefore, by performing clamping in the subsequent joining step and molding step, in the recess 81b, the core layer 20 is deformed in the thickness direction while thermally melting, and the first outer wall 21, the second outer wall 22, and the partition wall 23 of the core layer 20 are integrated. In the space formed by the protuberance 81c, a part of the core layer 20 is slightly thinned in the thickness direction while thermally melting, and the partition wall 23 of the core layer 20 is buckled or tilted. In the space formed by the recess 81a, the core layer 20 is not thermally melted or deformed, and the shape and size of the cells S of the core layer 20 are maintained.

Furthermore, by using the shielding material in the heating step, the portion of the stacked body that forms the upper surface 2a and the portion that forms the lower surface 2c of the shelf board 2 is relatively adjusted to have the lowest surface temperature, and the portion that forms the compressed portion 91 of the intermediate body 90 is relatively adjusted to have the highest surface temperature. Therefore, in the stacked body, the temperature difference between the portion forming the upper surface 2a and the portion forming the compressed portion 91 of the intermediate body 90 becomes large, and the temperature difference between the portion forming the lower surface 2c and the portion forming the end face 2d becomes large. As the boundary between the portion where the core layer 20 is compressed and the portion where the core layer 20 is not compressed becomes clear by performing clamping in the subsequent joining step and molding step, the curvature of the curved portion 62 of the second skin layer 60 increases and the inclination angle θ of the end face 2d of the shelf board 2 increases.

More specifically, the cells S arranged along the side edge form cell rows, and the core layer 20 includes the cells in the first row, the cells in the second row, and the cells in the third row arranged in order from the side edge toward the inner side in a direction intersecting the side edge. The cells S in the first row and the second row are compressed in the thickness direction. On the other hand, the cells S in the third row are not compressed, and the partition wall 23 maintains a straight state.

When the heated core layer 20 and the skin layers 50 and 60 are taken out from the heating furnaces 71 and 73, the temperature decreases, and the thermoplastic constituting the core layer 20 and the skin layers 50 and 60 attempts to contract. However, in the heating step of the first embodiment, the heating temperature of the steel plates 43 and 44 is set higher than the heating temperature of the core layer 20 and the skin layers 50 and 60, and in the joining step and the molding step, the heated steel plates 43, 44 are stacked so as to be sandwiched between the core layer 20 and the skin layers 50 and 60, so that the contraction of the core layer 20 and the skin layers 50 and 60 is suppressed by the steel plates 43 and 44 having a small linear expansion coefficient. As a result, the transfer to the molds 81 and 82 is improved, the stacked body is easily adhered to the molds 81 and 82, and the dimensional accuracy of the shelf board 2 is improved. Furthermore, the inclination angle of the end face 2d can be formed to a steep angle.

The range of the cells S to be compressed can be adjusted by adjusting the surface temperature of the core layer 20 in the heating step, the press pressure and the press time in the molds 81 and 82, and the like. For example, the condition may be changed so that the cells S in the first row are compressed in the thickness direction from the side edge toward the inner side, while the cells S in the second row are not compressed. In this case, the boundary between the portion where the core layer 20 is compressed and the portion where the core layer 20 is not compressed becomes clearer.

The first embodiment has the following advantages.
(1-1) The shelf board 2 is employed in a storage box and supported by a supporting portion 11 formed on the storage box body 1. At the side edge of the shelf board 2, the inclination angle of the end face 2d is greater than or equal to 70 degrees. Thus, a gap is not easily formed between the supporting portion 11 and the end face 2d, and foreign matters such as trash or dust are less likely to accumulate between the supporting portion 11 and the shelf board 2. Furthermore, since the inclination angle of the end face 2d is steep, it is easy to ensure the installation area of the lower surface of the shelf board 2 in the supporting portion 11. Therefore, the shelf board 2 can be stably supported by the supporting portion 11 without forming the supporting portion 11 large.
(1-2) At the end face 2d of the shelf board 2, the compressed portion 20a of the core layer 20 is interposed between the first skin layer 50 and the second skin layer 60. In the compressed portion 20a of the core layer 20, the thermoplastic constituting the core layer 20 is melted and then cooled and solidified, so that the first outer wall 21, the second outer wall 22, and the partition wall 23 become an integrated lump. Therefore, the rigidity of the end face 2d is enhanced, and the shelf board 2 can be stably supported by the supporting portion 11.
(1-3) At the side edge of the shelf board 2, the cells S in the first row and the second row of the core layer 20 are compressed in the thickness direction, while the cells S in the third row are not compressed, and the partition wall 23 maintains the standing state. Thus, since the honeycomb structure of the core layer 20 is maintained also at the side edges, the strength of the shelf board 2 is maintained.
(1-4) At the side edge of the shelf board 2, the first skin layer 50 is extended horizontally without being bent. Therefore, a large area of the upper surface, which is the surface on which the objects are placed on the shelf board 2, can be ensured.
(1-5) The shelf board 2 incorporates steel plates 43 and 44 that extend over the entire length in the longitudinal direction up to the opposite ends in the longitudinal direction. Therefore, the rigidity of the shelf board 2 is enhanced, and the deflection of the shelf board 2 when a heavy object is placed on the shelf board 2 is suppressed. Furthermore, since the shelf board 2 is reinforced by the steel plates 43 and 44 extending in the longitudinal direction of the shelf board 2, the shelf board 2 can be stably supported by the supporting portion 11.
(1-6) At the upper part of the shelf board 2, a recessed surface 2b recessed downward from the end edge of the upper surface 2a is extended over the entire length in the longitudinal direction at the central part in the transverse direction. Thus, the upper surface 2a of the shelf board 2 is relatively high on the front side and the back side, so that an object placed on the shelf board 2 is unlikely to fall.
(1-7) When manufacturing the shelf board 2, first, the core layer 20, the steel plates 43 and 44, and the skin layers 50 and 60 are preheated in the heating step, and then placed on the lower mold 82 while being arranged as a stacked body. An adhesive layer made of thermoplastic is coated on the opposite surfaces of each of the steel plates 43 and 44. Thus, the core layer 20 and the first skin layer 50 are temporarily joined to the lower surface and the upper surface of the steel plate 43, respectively, and the core layer 20 and the second skin layer 60 are temporarily joined to the upper surface and the lower surface of the steel plate 44, respectively. Thus, the core layer 20, the steel plates 43 and 44, and the skin layers 50 and 60 can be accurately positioned.
(1-8) In the heating step, the core layer 20, the steel plates 43 and 44, and the skin layers 50 and 60 are respectively heated in separate heating furnaces 71, 72, and 73. Thus, temperature adjustment and temperature management of each member are easily performed. Furthermore, each member can be heated to a uniform temperature.
(1-9) In the core layer 20 and the skin layers 50, 60 taken out from the heating furnaces 71, 73, the thermoplastic tends to shrink by temperature drop. However, in the joining step and the molding step, the shrinkage of the core layer 20 and the skin layers 50, 60 is suppressed by being joined with the steel plates 43, 44 having a low linear expansion coefficient in advance. Therefore, the transfer to the molds 81 and 82 becomes satisfactory, and the shelf board 2 can be accurately molded. Furthermore, the inclination angle θ of the end face 2d can be formed to a steep angle.
(1-10) In the first embodiment, the joining step and the molding step are performed simultaneously by press molding with the molds 81 and 82. Thus, the step is simplified, which is advantageous in terms of workability and cost.
(1-11) The molds 81 and 82 are formed with suction holes. Therefore, at the time of clamping, the stacked body formed by the core layer 20, the steel plates 43 and 44, and the skin layers 50 and 60 can be brought into close contact while being positioned with respect to the molds 81 and 82. Therefore, the stacked body can be molded so as to follow the shape of the internal space of the molds 81 and 82.
(1-12) In the heating step of the first embodiment, the surface temperature of the core layer 20 is adjusted to vary depending on the part by installing a shielding material. Therefore, in the subsequent joining step and molding step, portions having different thicknesses such as the recessed surface 2b and the compressed portion 91 can be simultaneously molded by a single press without heating the molds 81 and 82. The steps are thereby simplified, which is advantageous in terms of workability and cost.
(1-13) The temperature difference between the portion aligned with the recess 81a of the upper mold 81 and the portion aligned with the recess 81b of the upper mold 81 is increased in the core layer 20 by installing a shielding material in the heating step. Therefore, the boundary between the compressed portion and the uncompressed portion of the core layer 20 can be clarified.
(1-14) The temperature difference between the portion corresponding to the lower surface 2c and the portion corresponding to the end face 2d of the shelf board 2 is increased in the core layer 20 by installing the shielding material in the heating step. Therefore, the curvature of the curved portion 62 of the skin layer 60 can be increased, and the inclination angle θ of the end face 2d of the shelf board 2 can be formed large.
(1-15) In the heating step, the temperature in the heating furnace 71 for heating the steel plates 43, 44 is set to be higher than the temperature in the heating furnace 71 for heating the core layer and the temperature in the heating furnace 73 for heating the skin layers 50, 60. Therefore, a part of the thermoplastic constituting the core layer 20 and the skin layers 50, 60 is thermally melted by the heat of the steel plates 43, 44, and the core layer 20, the steel plates 43, 44 and the skin layers 50 and 60 can be joined over the entire surface by the clamping of the molds 81, 82.

The first embodiment may be modified as follows, and these modifications may be applied in appropriate combination.

In the first embodiment, a case in which the hollow board is employed in the shelf board 2 of the storage box has been described, but the shelf board 2 is not the sole case, and the hollow board of the present disclosure can be used as any plate-shaped member. For example, the hollow board of the present disclosure may be employed in a luggage board for vehicles, a work platform for construction, and the like. When it is employed in a luggage board, it can be stably supported without forming the supporting portion for supporting the luggage board large, and thus a large capacity of the compartment under the luggage board can be secured. Moreover, since the gap between the end face of a luggage board and a supporting portion can be made small, the sound from the lower side of the vehicle such as the friction sound of a road and a tire can be suppressed from being propagated to the inside of the vehicle. The shape of the hollow board, the joining area of the steel plates 43 and 44, the material of the skin layers 50 and 60, or the like can be changed according to the shape of the portion where the hollow board is disposed.

The shelf board 2 of the first embodiment has a smooth lower surface 2c at the lower part and an upper surface 2a and a recessed surface 2b at the upper part. Not limited to this, the shelf board 2 may have a smooth surface at the upper part and may have a lower surface 2c and a recessed surface 2b at the lower part, or may have a recessed surface 2b at both the upper and lower parts. Furthermore, a recess, a protuberance, or the like may be formed on the recessed surface 2b or the lower surface 2c. For example, a recess may be formed on the lower surface 2c so that a spotlight or the like can be attached. Furthermore, a through-hole that passes through the shelf board 2 in the thickness direction may be formed, and such a through-hole may be used as a handle for pulling out the shelf board 2, or a handle which is a separate part from the shelf board 2 may be attached to the through-hole. In a case where the shape of recess, protuberance, or through-hole is formed, a mold having a shape corresponding to the recess, protuberance, or through-hole may be prepared in the same manner as the shelf board 2 of the first embodiment, and the surface temperature may be appropriately adjusted to form the recess, the protuberance, or the through hole. In addition, when forming a recess or a through-hole, the hollow board may be shave processed. Moreover, in this case, the end face of the shave processed recess or through-hole may be sealed by thermal melting.

The shelf board 2 of the first embodiment may include a reinforcement portion of the second embodiment described later at a corner portion.

The hollow board does not necessarily need to be a smooth plate, and may be, for example, a curved plate.

At the side end of the shelf board 2 of the first embodiment, the second skin layer 60 is bent, and the first skin layer 50 is extended horizontally without being bent. The shape of the skin layers 50 and 60 is not limited thereto. For example, at the side end of the shelf board 2, the first skin layer 50 may be bent and the second skin layer 60 may be extended horizontally without being bent.

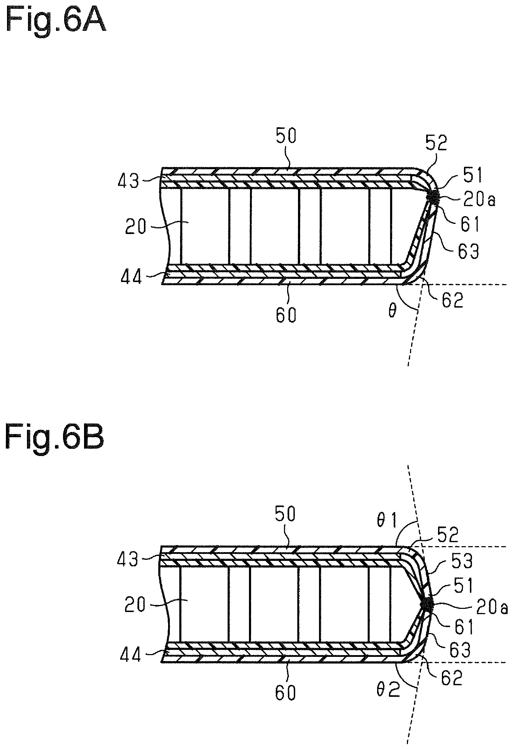

Furthermore, as shown in Fig. 6A, the first skin layer 50 may be slightly bent toward the second skin layer 60, and the second skin layer 60 bent toward the first skin layer 50 may cover most of the side surface of the core layer 20. The end face 2d of the shelf board 2 is formed by the end face 63 of the second skin layer 60, the compressed portion 20a of the core layer 20, and the bent portion of the first skin layer 50, but in this case, the proportion occupied by the first skin layer 50 of the end face 2d of the shelf board 2 is smaller than the proportion occupied by the second skin layer 60.

As another example, as shown in Fig. 6B, the compressed portion 20a of the core layer 20 may be sandwiched between the end edge 51 of the first skin layer 50 and the end edge 61 of the second skin layer 60 at an intermediate position in the vertical direction of the shelf board 2. In this case, the end face 53 of the first skin layer 50 has a steep slope that spreads slightly outward as it goes downward, and the end face 63 of the second skin layer 60 has a steep slope that spreads slightly outward as it goes upward.

The inclination angle θ of the end face 2d of the shelf board 2 when the skin layers 50 and 60 are both folded is defined as follows. As shown in Fig. 6A, when the proportion occupied by one bent portion at the side edge of the shelf board 2 is smaller than the proportion occupied by the other bent portion in the skin layers 50 and 60, an end face is not formed at the portion continuing to the curved portion (52 or 62) of one skin layer, and an end face (63 or 53) is formed only at the portion continuing to the curved portion of the other skin layer, the inclination angle θ of the end face 2d of the shelf board 2 is the inclination angle θ of the end face (63 or 53) of the other skin layer. Furthermore, as shown in Fig. 6B, when the skin layers 50, 60 are bent and the curved portions 52, 62 are formed at all side edges of the shelf board 2, and the end faces 53, 63 are respectively continued to the curved portions 52, 62, the inclination angle θ of the end face 2d of the shelf board 2 is the inclination angle θ1 of the end face 53 and the inclination angle θ2 of the end face 63. When the inclination angle θ1 of the end face 53 is different from the inclination angle θ2 of the end face 63, the larger value of the inclination angles θ1 and θ2 is the inclination angle θ of the end face 2d.

The steel plates 43 and 44 are joined to the first surface and the second surface of the core layer 20, respectively, but the steel plates may be joined to only one surface of the core layer 20. Furthermore, a steel plate may be joined over at least one of the first surface and the second surface of the core layer 20.

The steel plates 43 and 44 divided into multiple sheets may be joined to the first surface and the second surface of the core layer 20, respectively. In addition, the number of the steel plates to be joined, the joining location, the size, and the like may be different between the first surface and the second surface of the core layer 20.

The steel plates 43 and 44 may not be omitted.

The steel plates 43 and 44 are constituted by metal thin plates, but instead of the steel plates 43 and 44, for example, a fiber reinforced plastic thin plate containing a material having a high tensile elastic modulus such as carbon fiber or glass fiber may be used as the core layer 20.

The skin layers 50 and 60 of the first embodiment are constituted by a sheet material made of a thermoplastic, but at least one of the skin layers 50 and 60 may be a nonwoven fabric. For example, when the skin layer 50 is a nonwoven fabric, an adhesive layer made of a thermoplastic (e.g., polypropylene plastic) may be applied to the lower surface of the nonwoven fabric, and the skin layer, which is the nonwoven fabric, may be joined to the upper surface of the steel plate 43 (the outer surface of the steel plate 43) with the adhesive layer. The nonwoven fabric constituting the skin layers 50 and 60 can be molded from various conventionally known fibers such as polyamide fiber, aramid fiber, cellulose fiber, polyester fiber, polyethylene fiber, polypropylene fiber, rayon fiber, or glass fiber. When both the skin layers 50 and 60 are nonwoven fabrics, the skin layer 50 and the skin layer 60 may have the same configuration or may have different configurations.

The heating temperature in the heating step can be appropriately set according to the material of the thermoplastic constituting the core layer 20, the material of the metal constituting the steel plates 43, 44, the material of the thermoplastic constituting the skin layers 50, 60, and the material of the thermoplastic constituting the coated adhesive layer of the steel plates 43, 44. Furthermore, the heating temperature in the heating step can be changed according to the degree of deforming the core layer 20.

In the heating step of the first embodiment, the core layer 20, the steel plates 43 and 44, and the skin layers 50 and 60 are heated in separate heating furnaces 71, 72, and 73, respectively, but this is not the sole case. For example, the steel plates 43 and 44 and the skin layers 50 and 60 having similar heating temperatures may be heated in the same heating furnace.

The heating in the heating step may be heating in an open environment instead of heating in the heating furnaces 71, 72, 73. For example, heating may be carried out with a burner, an IH heater, or an infrared heater.

In the heating step, heating may be performed in a state where the steel plates 43 and 44 are positioned in advance on the first surface and the second surface of the core layer 20, respectively. As the steel plates 43, 44 are positioned by being temporarily joined to the core layer 20, the shift of the steel plates 43, 44 is suppressed. Furthermore, before the joining step and the molding step, the temperature drop of the core layer 20 is suppressed by the steel plates 43 and 44 and the thermal contraction of the core layer 20 is suppressed. As a result, transfer to the molds 81 and 82 is improved.

In the heating step of the first embodiment, the temperature in the heating furnace 72 for heating the steel plates 43 and 44 is set to be higher than the temperature in the heating furnace 71 for heating the core layer and the temperature in the heating furnace 73 for heating the skin layers 50 and 60, but the temperature in the heating furnaces 71, 72, 73 is not limited thereto. The temperatures in the heating furnaces 71, 72, 73 may all be the same temperature of an extent that the thermoplastic constituting the core layer 20 and the skin layers 50, 60 is melted. Even in this case, in a state where the core layer 20, the steel plates 43, 44, and the skin layers 50, 60 are placed on the lower mold 82, a part of the thermoplastic of the adhesive layer coated on the opposite surfaces of each of the heated steel plates 43, 44 is thermally melted, so that the core layer 20, the steel plates 43 and 44, and the skin layers 50 and 60 are temporarily joined onto the lower mold 82, thereby being positioned. In the joining step, the adhesive layers on the opposite surfaces of the steel plates 43 and 44 are thermally melted, and a part of the thermoplastic constituting the core layer 20 and the skin layers 50 and 60 is thermally melted, thus joining the core layer 20, the steel plates 43 and 44, and the skin layers 50 and 60.

According to the first embodiment, in the heating step, the surface temperature of the core layer 20 is adjusted to vary depending on the part by installing a shielding material on the surface of the core layer 20. This is not the sole case, and the surface temperature of the steel plates 43 and 44 and the skin layers 50 and 60 may be varied depending on the part in the heating step.

According to the first embodiment, in the heating step, the surface temperature of the core layer 20 is adjusted to vary depending on the part. In place thereof or in addition thereto, the heating temperature of the surface of the core layer 20 may be varied depending on the part in the joining step and the molding step. In this case, a shielding material such as punching metal, a wire mesh, or a steel plate is installed in the recesses 81a and 81b and the protuberance 81c of the upper mold 81, and the recess 82a of the lower mold 82 to block heat. Similar to the heating step of the first embodiment, the surface temperatures of the recesses 81a and 82a and the protuberance 81c can be adjusted by changing the size or number of holes formed in the shielding material. For example, a shielding material may be appropriately installed on the horizontal surface of the recess 81a of the upper mold 81 corresponding to the upper surface 2a of the shelf board 2 and the horizontal surface of the recess 82a of the lower mold corresponding to the recessed surface 2b.

More specifically, the heating temperature of the molds 81 and 82 is set to a temperature higher than the melting temperature of the thermoplastic of the adhesive layer coated on the steel plates 43 and 44, and a temperature higher than the melting temperature of the thermoplastic constituting the core layer 20 and the skin layers 50, 60, and the shielding materials are installed on the horizontal surface of the recess 81b corresponding to the compressed portion 91 of the intermediate body 90 and the horizontal surface of the recess 82a. Thus, the surface temperature of the horizontal surfaces of the recesses 81a and 82a is set to be the relatively lowest temperature, the surface temperature of the protuberance 81c is set to be the relatively second lowest temperature, and the surface temperature of the recess 81b is set to be a relatively highest temperature.

According to such adjustment, the temperature difference between the horizontal surface and the side surface can be increased in the recess 82a of the lower mold 82. Furthermore, the temperature difference between the horizontal surface of the recess 81a of the upper mold 81 and the recess 81b can be increased. Therefore, the core layer 20 that is in contact with the horizontal surface of the recess 81a and the horizontal surface of the recess 82a and the portions of the skin layers 50 and 60 are unlikely to melt, while the melting of core layer 20 and the skin layers 50, 60 that are in contact with the side surfaces of the recess 81b and the recess 82a of the upper mold 81 advance, so that the core layer and the skin layers 50, 60 are bent with a boundary portion between the melting portion and the portion that is unlikely to melt serving as a boundary. The curvature of the bending angle of the boundary portion can be increased by setting the temperature difference large, and as a result, the inclination angle of the end face 2d of the shelf board 2 can be increased.

The intermediate body 90 similar to that of the first embodiment can also be manufactured by heating the molds 81 and 82.

In the first embodiment, the joining step of joining the steel plates 43, 44 and the skin layers 50, 60, and the molding step of obtaining the intermediate body 90 by molding the core layer 20, the steel plates 43, 44, and the skin layers 50, 60 are performed simultaneously, but may be performed separately.

The shape of the suction holes of the molds 81 and 82 used in the joining step and the molding step is not particularly limited. For example, the molds 81 and 82 may have a slit-like suction groove.

### Second Embodiment

The board of the second embodiment is used, for example, as a shelf board of a storage box for storing books, shoes, or the like. In the second embodiment, members having the same configurations as those in the first embodiment are denoted by the same reference signs as those in the first embodiment, and redundant descriptions will be omitted.

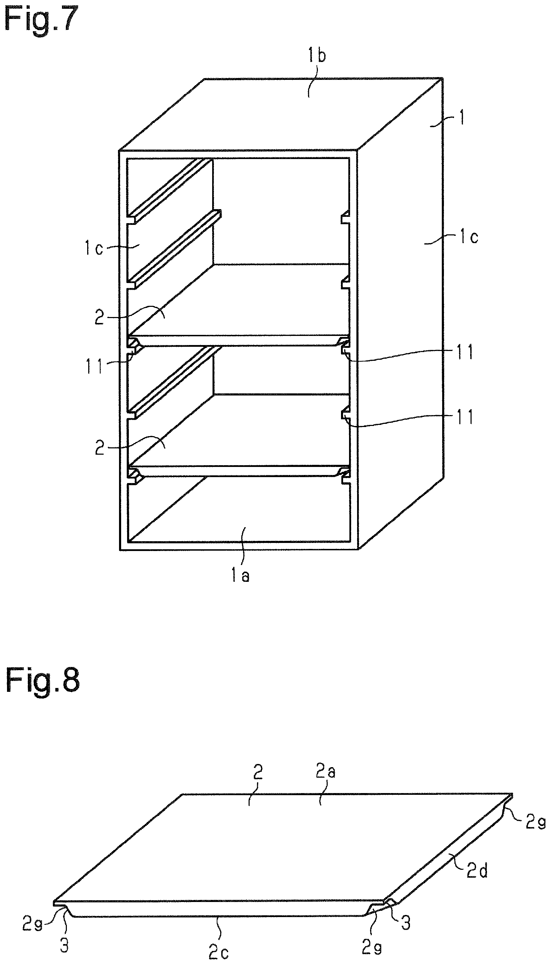

As shown in Fig. 8, the storage box includes a storage box body 1 having a bottom wall 1a, an upper wall 1b, two side walls 1c, 1c, and a back wall 1d, and a shelf board 2 having a rectangular plate shape. The two side walls 1c, 1c are the same as in the first embodiment in that they have multiple sets of supporting portions 11 arranged so as to face each other.

The shelf board 2 is a board formed to a polygonal (rectangular in the present embodiment) plate shape. The length of the long side of the shelf board 2 is slightly shorter than the length between the inner surfaces of the opposing side walls 1c, 1c of the storage box body 1, and the length of the short side of the shelf board 2 is slightly shorter than the width of the side wall 1c. The shelf board 2 is attached to a predetermined position of the storage box body 1 by placing the opposite ends in the longitudinal direction on a set of supporting portions 11 selected from multiple supporting portions 11. The shelf board 2 thereby partitions the internal space of the storage box body 1 into multiple spaces. Furthermore, the internal space of the storage box body 1 can be repartitioned by removing the shelf board 2 and placing it on another set of supporting portions 11.

As shown in Fig. 8, the shelf board 2 has four corner portions 2g. The corner portion 2g is a portion where the two side edges of the shelf board 2 intersect. The entire upper surface 2a of the shelf board 2 is smooth. Furthermore, the lower surface 2c of the shelf board 2 is smooth except for the four corner portions 2g. The four corner portions 2g include a reinforcement portion 3 to be described later. The reinforcement portion 3 has a shape recessed toward the upper side from the lower surface 2c of the shelf board 2.

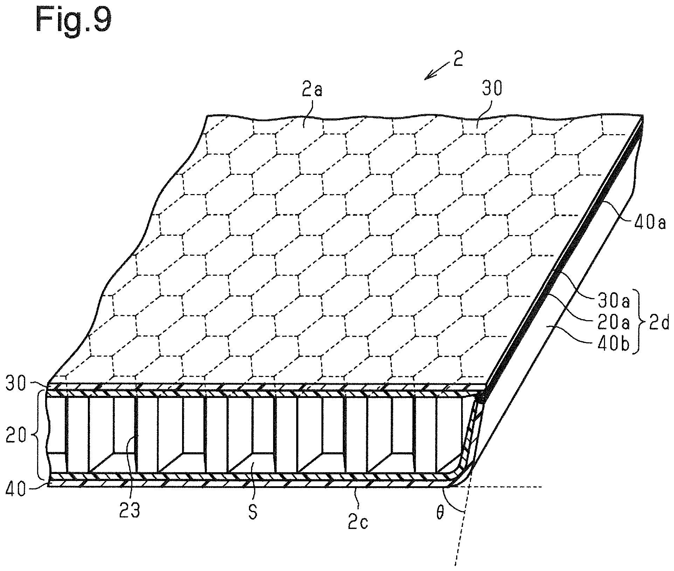

As shown in Figs. 9 and 3A, the shelf board 2 includes a core layer 20 similar to that of the first embodiment, and skin layers 30 and 40 made of thermoplastic joined so as to cover the entire core layer 20. The first skin layer 30 is stacked on the first surface (upper surface) of the core layer 20, and the second skin layer 40 is stacked on the second surface (lower surface) of the core layer 20. Figs. 9 and 3A are perspective views showing a part of a cross section in which the shelf board 2 is cut at a central portion in the transverse direction.

As shown in Fig. 9, a compressed portion 20a in which the core layer 20 is compressed and thinned in the thickness direction is formed at all (four in the present embodiment) side edges of the shelf board 2 except the corner portion 2g.

As shown in Fig. 9, the second skin layer 40 is bent toward the compressed portion 20a at all side edges of the shelf board 2 except the corner portion 2g. The first skin layer 30 is extended horizontally without being bent at any of the side edges. The end edge 30a of the first skin layer 30 and the end edge 40a of the second skin layer 40 are abutted with each other with the compressed portion 20a of the core layer 20 interposed therebetween.

As shown in Fig. 9, in the shelf board 2 according to the second embodiment, only the second skin layer 40 is bent upward at all side edges except the corner portion 2g. A portion of the second skin layer 40 from the bent curved portion to the end edge 40a forms an end face 40b that covers the core layer 20 from the side. The end face 2d of the shelf board 2 is configured by the end face 40b of the second skin layer 40, the compressed portion 20a of the core layer 20, and the end edge 30a of the first skin layer 30.

As shown in Fig. 9, in the end face 2d of the shelf board 2, a portion where the skin layer 40 is bent is curved. The inclination angle of the end face 40b of the skin layer 40, that is, the inclination angle θ of the end face 40b (end face 2d) with respect to the lower surface 2c of the shelf board 2 is about 70 to 90°.

As shown in Figs. 9 and 3A, the core layer 20 is formed by folding a single sheet material made of thermoplastic molded to a predetermined shape, similar to the first embodiment. The configuration and manufacturing method of the core layer 20 are similar to those in the first embodiment, and thus the description thereof will be omitted.

The first skin layer 30 is joined to the first surface of the core layer 20 with a thermoplastic adhesive layer (not shown). Similarly, the second skin layer 40 is joined to the second surface of the core layer 20 through a thermoplastic adhesive layer (not shown). The thermoplastic forming the skin layers 30 and 40 may be any conventionally known thermoplastic, such as for example, polypropylene plastic, polyamide plastic, polyethylene plastic, acrylonitrile-butadiene-styrene copolymer plastic, acrylic plastic, or polybutylene terephthalate plastic. The thermoplastic forming the skin layers 30 and 40 is preferably the same thermoplastic as that of the core layer 20, and the skin layers 30 and 40 of the second embodiment are made of polypropylene plastic. In the second embodiment, the thickness of the first skin layer 30 and the second skin layer 40 is the same, and is about 0.5 mm to several mm.

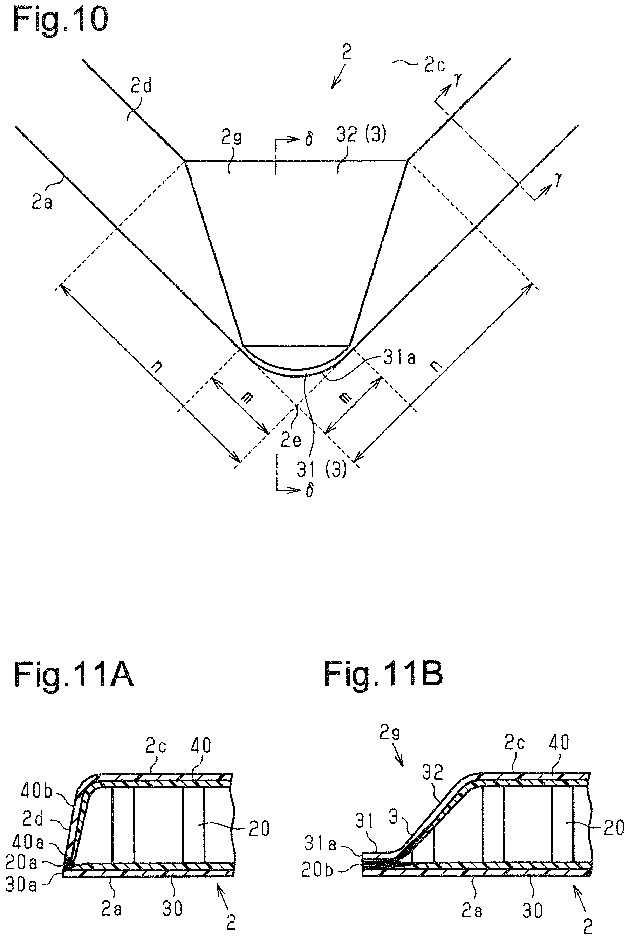

As shown in Fig. 10, the four corner portions 2g of the shelf board 2 each include a reinforcement portion 3. Figs. 10, 11, and 13 to 15 show a state in which the shelf board 2 is turned over so that the lower surface 2c faces upward and the upper surface 2a faces downward.

As shown in Figs. 10 and 11B, the reinforcement portion 3 includes a slope 32 extending in a direction obliquely intersecting the upper surface 2a and the lower surface 2c, and a flat portion 31 located at the distal end portion of the corner portion 2g and continuing to the slope 32.

As shown in Fig. 10, the slope 32 is inclined at the corner portion 2g of the shelf board 2 so as to face the inner side of the shelf board 2 from the upper surface 2a toward the lower surface 2c. At the corner portion 2g of the shelf board 2, an imaginary intersection between the upper sides of the two intersecting end faces 2d is 2e. The slope 32 has an isosceles trapezoidal shape, which trapezoid has two parallel bases. The shorter base of the trapezoid is a straight line connecting two points where a length from the imaginary intersection 2e in plan view is m at two adjacent sides of the upper surface 2a. The longer base of the trapezoid is a straight line connecting two points where a length from the imaginary intersection 2e in plan view is n at two adjacent sides of the lower surface 2c. The length m is preferably about 2 to 30 mm, more preferably about 3 to 15 mm, and the length n is preferably about 10 to 40 mm, and more preferably about 20 to 30 mm. The length n is longer than the length m. The slope 32 may be a curved surface that bulges out outward.

The flat portion 31 that intersects the slope 32 extends substantially horizontally along the upper surface 2a of the shelf board 2. The flat portion 31 is the thinnest portion of the shelf board 2. The end edge 31a of the flat portion 31 has an arcuate shape that bulges out outward. The radius of curvature of the end edge 31a is preferably about 5 to 20 mm, and more preferably about 5 to 10 mm.

When the flat portion 31 and the slope 32 are projected onto the upper surface 2a, the area occupied by the flat portion 31 is narrower than the area occupied by the slope 32. Assuming the values of the lengths m and n that determine the shape of the slope 32 are in the above range and the radius of curvature of the end edge 31a of the flat portion 31 is in the above range, the flat portion 31 can be formed to have an appropriate area. The flat portion 31 includes the compressed portion 20b between the skin layers 30 and 40, but the skin layers 30 and 40 can be effectively suppressed from being peeled off by an impact on the corner portion 2g.

A curved surface may be interposed at the boundary portion between the lower surface 2c and the end face 2d of the shelf board 2 (see Fig. 9). Furthermore, a curved surface may be interposed at a boundary portion between the lower surface 2c and the slope 32, a boundary portion between the slope 32 and the flat portion 31, and a boundary portion between the slope 32 and the end face 2d. Compared to the curvature of the curved surface interposed at the boundary portion between the lower surface 2c and the side surface, the curvature of the curved surface interposed at the boundary portion between the lower surface 2c and the slope 32, the boundary portion between the slope 32 and the flat portion 31, and the boundary portion between the slope 32 and the end face 2d may be reduced. In this way, the impact on the corner portion 2g of the shelf board 2 is easily dispersed.

As shown in Fig. 11B, in the reinforcement portion 3, the compression rate of the core layer 20 increases toward the apex part of the corner portion 2g. The flat portion 31 includes the compressed portion 20b at a portion where the thickness of the core layer 20 is the thinnest (the compression rate is the highest). The compressed portion 20b is formed by press molding in a molding step to be described later, similarly to the compressed portion 20a of the core layer 20 formed at the side edge excluding the reinforcement portion 3 (corner portion 2g). In the compressed portion 20b, almost all of the thermoplastic constituting the core layer 20 is melted, and in the cell S forming the core layer 20, the partition wall 23, which will be described later, is deformed to such an extent that its shape cannot be identified and the first outer wall 21 and the second outer wall 22 are integrated. The compressed portion 20b of the core layer 20 formed on the reinforcement portion 3 has substantially the same thickness as the compressed portion 20a of the core layer 20 formed on the side edge of the shelf board 2 excluding the reinforcement portion 3.

Furthermore, as shown in Figs. 11A and 11B, the compressed portion 20b formed in the reinforcement portion 3 may be wider than the compressed portion 20a formed on the side edge of the shelf board 2 excluding the reinforcement portion 3. That is, the flat portion 31 projects out horizontally with respect to the end face 2d of the shelf board 2. In this description, "wider than the compressed portion 20a" means that the length in the direction intersecting the side edge of the shelf board 2 is longer in the compressed portion 20b than the compressed portion 20a. Accordingly, each corner portion 2g of the shelf board 2 includes the reinforcement portion 3, and the reinforcement portion 3 includes the flat portion 31 having the compressed portion 20b wider than the compressed portion 20a extending along the side edge, and the slope 32 continuing to the flat portion 31.

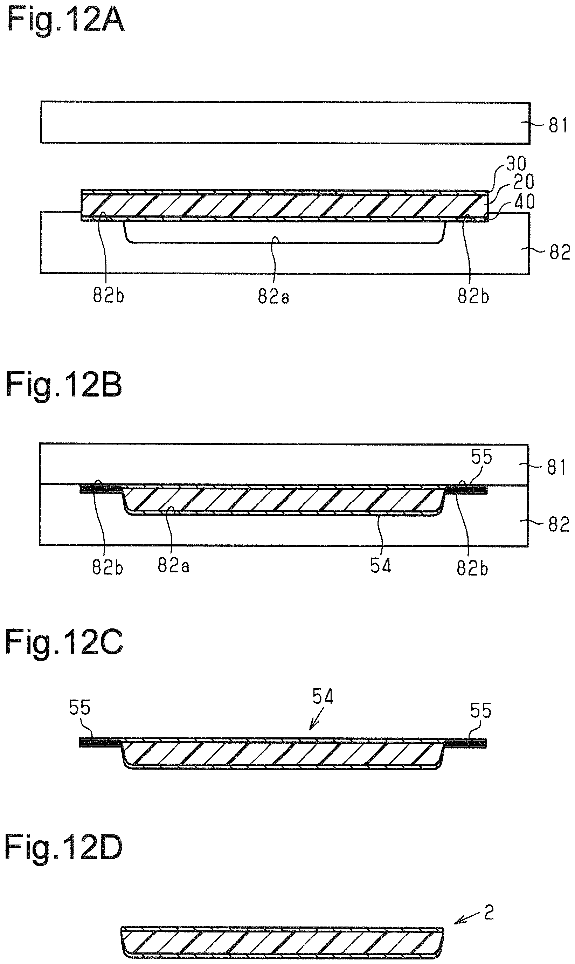

Next, a method for manufacturing the shelf board 2 will be described with reference to Figs. 4 and 12. The method for manufacturing the shelf board 2 can be divided to a step of forming the core layer 20, a molding step of press processing the core layer 20 and the skin layers 30 and 40 to obtain the intermediate body 54, and a post-processing step of adjusting the shape of the end face of the intermediate body 54 to obtain the shelf board 2.

The step of forming the core layer 20 is the same as in the first embodiment.

Next, a molding step of press processing the core layer 20 and the skin layers 30 and 40 to obtain the intermediate body 54 will be described.

First, in order to prepare the core layer 20 to use for the shelf board 2, the core layer 20 manufactured first is cut into a shape larger than the shelf board 2, similar to the first embodiment. In Fig. 12, the hollow structure of the core layer 20 is omitted. The skin layers 30 and 40 to use the shelf board 2 are also cut into a shape larger than that of the shelf board 2, specifically, size of the same extent as the core layer 20.

The core layer 20 and the skin layers 30 and 40 are respectively heated at a predetermined temperature for a predetermined time. The heating temperature and the heating time can be appropriately set according to the material of the thermoplastic constituting the core layer 20 and the skin layers 30 and 40.

As shown in Fig. 12A, the lower mold 82 of the mold for press processing includes a recess 82a recessed to a substantially rectangular shape. At the four corners of the recess 82a, the portion for forming the reinforcement portion 3 of the shelf board 2 is provided. Furthermore, a recess 82b shallower than the recess 82a is formed at the four sides of the recess 82a. The lower surface of the upper mold 81 is a smooth surface.

The heated second skin layer 40, core layer 20, and first skin layer 30 are arranged in order from the bottom to form a stacked body. The stacked body is placed in an aligned state on the lower mold 82. The core layer 20 and the skin layers 30 and 40 are cut into a rectangular shape larger than the shelf board 2. Thus, in a state where the stacked body is placed on the lower mold 82, the four sides of the stacked body are placed over the outer edge of the recess 82a.

The upper mold 81 and the lower mold 82 of the second embodiment are heated to a predetermined temperature. The heating temperature can be appropriately set, but in the second embodiment, the heating temperature of the lower mold 82 is varied depending on the part. Specifically, the heating temperature of the peripheral wall of the recess 82a and the recess 82b is set high, and the heating temperature of the part other than the peripheral wall of the recess 82a is set low. Furthermore, the heating temperature of the upper mold 81 and the lower mold 82 is set slightly higher than the melting temperature of the thermoplastic constituting the core layer 20 and the skin layers 30 and 40 in any part.

Then, as shown in Fig. 12B, the upper mold 81 is lowered toward the lower mold 82 and clamped to press the stacked body. Suction holes (not shown) are formed in the upper mold 81 and the lower mold 82, and suction is performed through the suction holes at the time of clamping as in the first embodiment.

As shown in Fig. 12B, the stacked body is molded into the inner surface shape of the lower mold 82, that is, the shape of the recesses 82a, 82b to become the intermediate body 54. The intermediate body 54 has a flat plate shaped peripheral portion 55 on the side edge.

In the molding step, the heating temperature of the peripheral wall of the recess 82a and the recess 82b for forming the peripheral portion 55 of the intermediate body 54 in the lower mold 82 is set high. Therefore, the peripheral portion 55 and the portion corresponding to the corner portion 2g and the end face 2d of the shelf board 2 in the intermediate body 54 are integrated by melting the thermoplastic constituting the core layer 20 and the skin layers 30 and 40. Thus, the compressed portion 20a is formed at the portion corresponding to the end face 2d of the shelf board 2, and the compressed portion 20b is formed at the portion corresponding to the corner portion 2g of the shelf board 2 and the peripheral portion 55 of the intermediate body 54. The compressed portions 20a and 20b are thinner than the uncompressed core layer 20. Furthermore, the compressed portions 20a and 20b are more strongly bonded to the skin layers 30 and 40 than the uncompressed core layer 20.

Furthermore, in the lower mold 82, the parts excluding the four corners and the peripheral wall of the recess 82a are set to have a low heating temperature, and such heating temperature is set to be slightly higher than the melting temperature of the thermoplastic that configures the core layer 20 and the skin layers 30, 40. Therefore, at the portions other than the portions corresponding to the corner portion 2g and the end face 2d of the shelf board 2 in the intermediate body 54, the thermoplastic forming the core layer 20 and the skin layers 30 and 40 is melted, and the core layer 20 and the skin layers 30, 40 are thermally welded.

In the recess 82a, the heating temperature at the four corner portions and the peripheral wall is higher than the heating temperatures at other parts. Therefore, as shown in Fig. 9, in the core layer 20, the cells S in the first row and the second row arranged in order from the side edge toward the inner side are compressed in the thickness direction. The cells S in the third row are not compressed and the original shape is maintained.

As shown in Fig. 12C, after separating the upper mold 81 from the lower mold 82 and cooling the intermediate body 54, the intermediate body 54 is taken out from the lower mold 82. In the intermediate body 54 obtained through the molding step, the skin layers 30 and 40 are joined to the first surface and the second surface of the core layer 20, respectively. The intermediate body 54 includes the peripheral portion 55 formed over the entire periphery of the side edge of a portion having a size and shape corresponding to the shelf board 2.

Next, a post-processing step for adjusting the shape of the end face of the intermediate body 54 will be described.

As shown in Fig. 12D, the peripheral portion 55 formed at the periphery of the intermediate body 54 is cut. The cutting can be performed with a cutting jig such as a Thomson blade or a laser. The side edges excluding the corner portions 2g of the shelf board 2 are formed by the cutting.

As shown in Figs. 9 and 11A, the side edge of the intermediate body 54 includes the compressed portion 20a of the core layer 20 interposed between the end edge 30a of the skin layer 30 and the end edge 40a of the skin layer 40. Furthermore, an end face 2d of the shelf board 2 is formed at the side edge of the intermediate body 54 by the end edge 30a of the skin layer 30, the end face 40b of the skin layer 40, and the compressed portion 20a of the core layer 20.

As shown in Fig. 11B, the reinforcement portion 3 is formed at the corner portion 2g of the shelf board 2, and the reinforcement portion 3 includes the flat portion 31 and the slope 32. The flat portion 31 includes a flat plate-shaped compressed portion 20b wider than the compressed portion 20a interposed between the skin layer 30 and the skin layer 40.

Thereafter, the cut surface of the shelf board 2 is polished, painted, and the like to adjust the shapes of the end face 2d and the reinforcement portion 3. The shelf board 2 is manufactured through the manufacturing steps described above.

The operation of the shelf board 2 of the second embodiment will be described.

The shelf board 2 of the second embodiment is placed on a set of supporting portions 11 formed in the storage box body 1, and the internal space of the storage box body 1 can be partitioned into spaces. Furthermore, when the shelf board 2 is replaced on another set of supporting portions 11, the shape of the internal space of the storage box body 1 can be changed.

If the shelf board 2 is dropped when changing the supporting portion 11 on which to place the shelf board 2, the corner portion 2g may hit the floor, and the impact of the drop may be applied to the corner portion 2g. In the shelf board 2 of the second embodiment, each corner portion 2g includes the reinforcement portion 3, and each reinforcement portion 3 includes the flat portion 31 having the compressed portion 20b of the core layer 20 and the slope 32 continuing to the flat portion 31. Moreover, the compressed portion 20b of the flat portion 31 is wider than the compressed portion 20a formed in the side edge. That is, since the flat portion 31 has a long length in the direction intersecting the side edge, when the flat portion is compressed and deformed in the length direction, the received impact can be absorbed. Furthermore, in the flat portion 31, the portion where the thermoplastic constituting the core layer 20 is dense is wide (long in the direction intersecting the side edge), and hence even when an impact is applied to the corner portion 2g, plastic deformation is less likely to occur. In the flat portion 31, the compressed portion 20b and the skin layers 30 and 40 are strongly joined. Therefore, the skin layers 30 and 40 are not easily peeled off from the core layer 20 when an impact is applied to the corner portion 2g. Furthermore, since the slope 32 is continued to the flat portion 31, the impact applied to the corner portion 2g is dispersed from the flat portion 31 toward the slope 32. Moreover, if the slope 32 is a curved surface that bulges outward, the impact can be efficiently absorbed.

The second embodiment has the following advantages.
(2-1) The reinforcement portion 3 is formed at the corner portion 2g of the shelf board 2 of the second embodiment. The reinforcement portion 3 has a flat portion 31 including a compressed portion 20b having a width wider than that of the compressed portion 20a at the side edge. In the compressed portion 20b, the thermoplastic constituting the core layer 20 is melted and then cooled and solidified, so that the first outer wall 21, the second outer wall 22, and the partition wall 23 are integrated into a lump. Therefore, when the impact is applied to the corner portion 2g of the shelf board 2 by the compressed portion 20b, which is a portion where the thermoplastic constituting the core layer 20 is dense, the flat portion 31 can suppress deformation and the like of the corner portion 2g.
(2-2) At the flat portion 31, the compressed portion 20b and the skin layers 30, 40 are strongly joined. Therefore, even if an impact due to, for example, drop is applied to the corner portion 2g of the shelf board 2, the peeling of the skin layers 30 and 40 from the core layer 20 can be suppressed at the corner portion 2g.
(2-3) The end edge 31a of the flat portion 31 has an arcuate shape that bulges outward. Therefore, even if an impact is applied to the end edge 31a of the flat portion 31, the impact can be effectively dispersed. By dispersing the impact in this manner, the separation between the skin layers 30 and 40 from the compressed portion 20b can be suppressed at the flat portion 31.
(2-4) When the slope 32 of the reinforcement portion 3 is a curved surface, the impact can be effectively absorbed by the elastic deformation of the slope 32. That is, the impact applied to the flat portion 31 is dispersed to the slope 32 continuing to the flat portion 31. Furthermore, if the slope 32 is a curved surface, the recess at the corner portion 2g of the shelf board 2 is less likely to stand out.
(2-5) In a projected area of the reinforcement portion 3 onto the upper surface 2a, the area occupied by the flat portion 31 is smaller than the area occupied by the slope 32. In other words, the area of the slope 32 is wider than the area of the flat portion 31 having a thinner thickness. Thus, the deformation of the reinforcement portion 3 is suppressed by dispersing the impact applied to the flat portion 31 on the slope 32.
(2-6) At the end face 2d of the shelf board 2, the compressed portion 20a of the core layer 20 is interposed between the first skin layer 30 and the second skin layer 40. In the compressed portion 20a of the core layer 20, the thermoplastic constituting the core layer 20 is melted, and then cooled and solidified, so that the first outer wall 21, the second outer wall 22, and the partition wall 23 become an integrated lump. Thus, it can be stably supported by the supporting portion 11.
(2-7) At the side edge of the shelf board 2, the cells S in the first row and the second row arranged in order from the side edge toward the inner side are compressed in the thickness direction, whereas the cells S in the third row are not compressed. Therefore, the honeycomb structure of the core layer 20 is maintained up to the vicinity of the end edge, and the strength is maintained.
(2-8) At the side edge of the shelf board 2, the first skin layer 30 is extended horizontally without being bent. Therefore, a large area of the upper surface 2a, which is the surface on which the objects are placed on the shelf board 2, can be ensured.
(2-9) At the end face 2d of the shelf board 2, the second skin layer 40 is bent and curved, and the inclination angle of the end face 40b of the second skin layer 40, that is, the inclination angle θ of the end face 40b (end face 2d) of the shelf board 2 with respect to the lower surface 2c is about 70 to 90°. Therefore, it is stably held on the supporting portion 11 of the storage box body 1.
(2-10) The curvature of the curved surface interposed at the boundary portion between the lower surface 2c and the slope 32, the boundary portion between the slope 32 and the flat portion 31, and the boundary portion between the slope 32 and the end face 2d is greater than the curvature of the curved surface interposed at the boundary portion between the lower surface 2c and the end face 2d in the shelf board 2. Therefore, the impact on the corner portion 2g of the shelf board 2 is easily dispersed. On the other hand, since the curvature of the boundary portion between the lower surface 2c and the end face 2d is small, the shelf board 2 is stably held on the supporting portion 11 even when the projecting length of the supporting portion 11 of the storage box body 1 is small.
(2-11) In the molding step of the shelf board 2, the heating temperature in the lower mold 82 is varied depending on the part. Thus, the shelf board 2 including the reinforcement portion 3 having the flat portion 31 and the slope 32 and the end face 2d having the compressed portion 20a can be molded by a single press. Thereby, the molding step of the shelf board 2 can be simplified.

The second embodiment may be modified as follows, and these modifications may be applied in appropriate combination.

In the second embodiment, a case where the board is employed in the shelf board 2 of the storage box has been described, but the present invention is not limited to the shelf board 2 and can be employed in any plate-shaped member. For example, a board of a structure similar to the shelf board 2 of the present embodiment may be employed in a table, a pallet, a luggage board for vehicles, and the like.

The flat portion 31 of the reinforcement portion 3 does not necessarily need to include the compressed portion 20b. In this case, the core layer 20 at the portion of the flat portion 31 is removed in advance before the molding step, and the first skin layer 30 and the second skin layer 40 are joined at the portion of the flat portion 31 in the molding step. In this case, by press processing the skin layers 30 and 40 in the molding step, the skin layers 30 and 40 are compressed thus forming the flat portion 31, whereby the rigidity of the reinforcement portion 3 can be increased. Furthermore, the core layer 20 does not necessarily need to be interposed in a part of the slope 32.

The shelf board 2 of the second embodiment is a planar-shaped board, but is not limited thereto. For example, a board of a curved shape may be used.

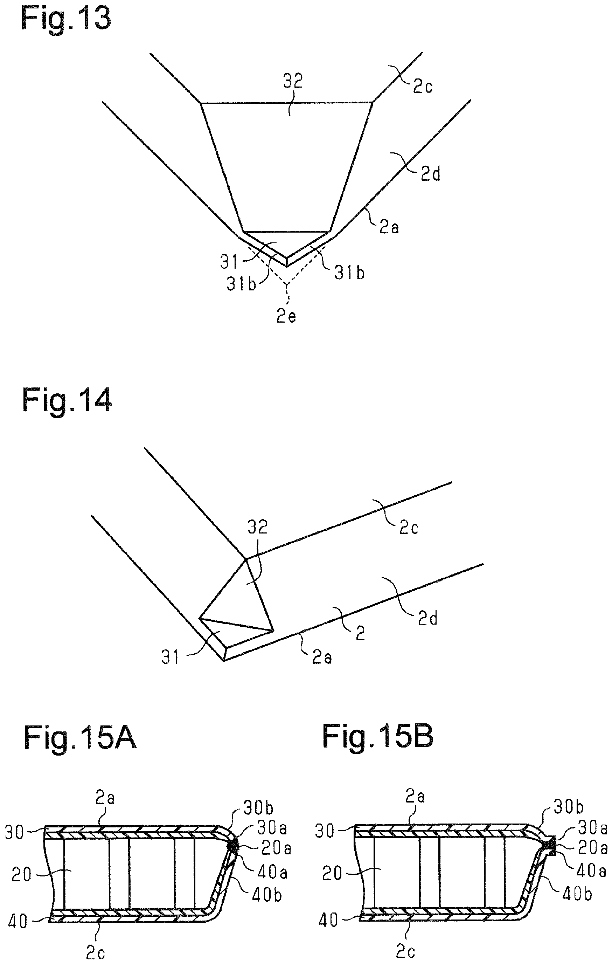

In the shelf board 2 of the second embodiment, the end edge 31a of the flat portion 31 has an arcuate shape, but this is not the sole case. For example, as shown in Fig. 13, at the corner portion 2g of the shelf board 2, when the imaginary intersection point between the upper sides of the end faces 2d orthogonal to each other is 2e, the flat portion 31 may have a shape (angular shape) having two end edges 31b and 31b that intersect each other at an obtuse angle at a position inward of the imaginary intersection 2e.

A protrusion or a recess may be provided on the surface of the flat portion 31. Furthermore, a protrusion or a recess may be provided on the surface of the slope 32.

The flat portion 31 is extended in a substantially horizontal direction along the upper surface 2a of the shelf board 2, but the shape thereof is not limited thereto. For example, the end edges 31a and 31b of the flat portion 31 may be curved upward. In this case, the flat portion 31 becomes the distal end 31. Moreover, the flat portion 31 may be inclined with respect to the upper surface 2a of the shelf board 2. In this case, the inclination angle of the flat portion 31 is preferably smaller than the inclination angle of the slope 32.

The shape of the reinforcement portion 3 may be changed. For example, the flat portion 31 may be a crescent moon shape. In addition, as shown in Fig. 14, the slope 32 may have a triangular shape, and one of the corners of the triangle may be in contact with the corner of the lower surface 2c. Furthermore, a triangular flat portion 31 may be provided in which one side overlaps a side connecting the remaining two corners of the triangle. In this case, in the area of the reinforcement portion 3 projected onto the upper surface 2a, the area occupied by the flat portion 31 may be larger than or equal to the area occupied by the slope 32.

The slope 32 of the shelf board 2 of the second embodiment has an isosceles trapezoidal shape. The shape of the slope 32 is not limited thereto, and the lengths of the two sides connecting the opposite ends of the two bases may be different.

In the shelf board 2 of the second embodiment, the reinforcement portion 3 is provided on the lower surface 2c, but may be provided on the upper surface 2a, or may be provided on both of the upper surface 2a and the lower surface 2c.

At the side end of the shelf board 2 of the second embodiment, the second skin layer 40 is bent and the first skin layer 30 is extended horizontally. The shape of the skin layers 30 and 40 is not limited thereto. For example, the first skin layer 30 may be bent and the second skin layer 40 may be extended horizontally.

Furthermore, as shown in Fig. 15A, the first skin layer 30 may be slightly bent toward the second skin layer 40, and the second skin layer 40 bent toward the first skin layer 30 may cover most of the end face of the core layer 20. The end face 2d of the shelf board 2 is formed by the end face 40b of the second skin layer 40, the compressed portion 20a of the core layer 20, and the bent portion 30b of the first skin layer 30, but in this case, the proportion of the end face 2d of the shelf board 2 occupied by the first skin layer 30 is smaller than the proportion occupied by the second skin layer 40.

The shape of the end face 2d of the shelf board 2 may be changed. As shown in Fig. 15B, the end edge 30a of the skin layer 30 and the end edge 40a of the skin layer 40 may be respectively extended outward, and the compressed portion 20a may be interposed between the outwardly extending end edge 30a and the end edge 40a. In this case as well, the length in the direction intersecting the side edge is shorter in the compressed portion 20a than in the compressed portion 20b. The end face 2d having such a shape can be obtained by cutting the peripheral portion 55 from the intermediate body 54 while slightly leaving the peripheral portion 55 than on the most inward side of the peripheral portion 55. In this case, since the joining area between the compressed portion 20a and the skin layers 30 and 40 becomes wide at the end face 2d, peeling of the skin layers 30 and 40 at the end face 2d can be suppressed.

The skin layers 30 and 40 of the second embodiment are constituted by a sheet material made of thermoplastic, but one or both can be made of a nonwoven fabric. For example, when the skin layers 30 and 40 are made of nonwoven fabric, an adhesive layer made of a thermoplastic (e.g., polypropylene plastic) may be applied to one surface of the nonwoven fabric, and the first surface and the second surface of the core layer 20 may be joined with the adhesive layer. The nonwoven fabric constituting the skin layers 30 and 40 can be molded with various conventionally known fibers such as, polypropylene fibers and polyester fibers. When both skin layers 30 and 40 are nonwoven fabrics, the first skin layer 30 and the second skin layer 40 may have the same configuration or may have different configurations.

The shelf board 2 of the second embodiment may include other layers in addition to the core layer 20 and the skin layers 30 and 40. For example, a decorative layer, a protective layer or the like made of a nonwoven fabric or the like may be stacked on the upper surface of the first skin layer 30 and the lower surface of the second skin layer 40. Furthermore, in order to enhance the strength of the shelf board 2, a steel plate similar to that of the first embodiment may be stacked on one or both of the core layer 20 and the skin layers 30, 40. In the shelf board 2 including the skin layers 30 and 40 which are stacked nonwoven fabrics, when the peripheral portion 55 of the intermediate body 54 is cut after the molding step, the end faces of the skin layers 30 and 40 are exposed on the surface. Thus, whether the skin layers 30 and 40 are joined can be visually confirmed.

One or both of the upper surface 2a and the lower surface 2c of the shelf board 2 may have a recess, a protuberance, or a hole. In addition, when forming a recess or a hole, the board may be shave processed. Furthermore, in this case, the end faces of the shave processed recess and the hole may be sealed by thermal melting.

Although the shelf board 2 of the second embodiment is a rectangular plate shape, the shape is not particularly limited. Any polygonal shape with corner portions may be adopted. Moreover, not a regular polygonal shape but an irregular polygonal shape may be adopted.

The core layer 20 does not necessarily need to be a hollow body. For example, the core layer 20 may be configured by a board made of various foams such as flexible polyurethane foam, rigid polyurethane foam, polystyrene foam, polyethylene foam, polypropylene foam, ethylene vinyl acetate copolymer crosslinked foam, polyethylene terephthalate plastic foam, phenol foam, and silicon foam.

In the second embodiment, the heating temperature of the molds 81 and 82 is adjusted to vary depending on the part in the molding step. In place thereof or in addition thereto, the heating temperature of the core layer 20 and the skin layers 30, 40, that is, the heating temperature of the core layer 20 and the skin layers 30, 40 before being placed on the mold 81, 82 may be adjusted to vary depending on the part. In this case, in order to adjust the heating temperature, a shielding material such as a punching metal, a wire mesh, or a steel plate is appropriately installed on the surface of the core layer 20 so as to shield heat. The heating temperature can be adjusted by changing the size, number, or the like of the holes formed in the shielding material.

The first and second embodiments may be modified as follows, and these modifications may be applied in appropriate combination.

A printed plastic film may be used as the skin layers 30, 40, 50, 60. The shelf board 2 thus can be decorated.

The core layer 20 is not limited to being configured by folding and molding the single first sheet material 100. For example, band-shaped sheets are bent and arranged at a predetermined interval to constitute the side wall of the cell, and a sheet layer is arranged on each of the upper and lower surfaces of the band-shaped sheet to constitute the upper wall and the lower wall of the cell.

In the first and second embodiments, cells S of hexagonal cylinder shape are defined inside the core layer 20, but the shape of the cells S is not particularly limited. For example, the cell S may have a polygonal shape such as a quadrangular prism shape or an octagonal prism shape, or a circular column shape. As another example, the shape of the cell S may be a truncated cone shape in which the diameter decreases toward the bulging surface. Furthermore, cells S having different shapes may coexist in the core layer 20. Moreover, the cells do not have to be adjacent to each other, and a gap (space) may exist between the cells S.

The core layer 20 is not limited to that in which the columnar cells S are defined. For example, the core layer 20 may be formed by joining sheet layers to both surfaces of a sheet body having a predetermined uneven shape. The core layer having such a configuration includes, for example, that described in Japanese Laid-Open Patent Publication No. 2014-205341. As another example, the core layer 20 may be a plastic corrugated cardboard having a harmonica-like cross-section in which sheet layers are joined to both surfaces of a corrugated sheet curved or bent to a wavy form.

In the first and second embodiments, the single first sheet material 100 is folded and molded to form the core layer 20 which is a honeycomb structural body where hexagonal cells S are defined inside the core layer 20, but the molding method is not limited thereto. For example, as described in Japanese Patent No. 4368399, the core layer 20 which is a honeycomb structural body may be formed by sequentially folding a three-dimensional structural body in which rows of protuberances having a trapezoidal cross-section are arranged.

The skin layers 30, 40, 50, 60 are not limited to a single layer structure, and may have a multilayer structure.

As the thermoplastic constituting the core layer 20 and the skin layers 30, 40, 50, 60, that added with various functional plastics may be used. For example, it is possible to increase flame retardancy by adding a flame retardant plastic to the thermoplastic. All of the core layer 20 and the skin layers 30, 40, 50, 60 may be formed of a thermoplastic added with a functional plastic, or at least one of the core layer 20 and the skin layers 30, 40, 50, 60 may be formed of a thermoplastic added with a functional plastic.

## Claims

1. A hollow board comprising:
a core layer made of plastic that includes a first surface, a second surface opposite to the first surface, and a plurality of partition walls extending between the first surface and the second surface to define a plurality of cells;
a first skin layer stacked on the first surface of the core layer; and
a second skin layer stacked on the second surface of the core layer, wherein
the board comprises a side edge including a compressed portion in which the core layer is compressed in a thickness direction, and an end face formed by bending at least one of the first skin layer and the second skin layer toward the other skin layer at the side edge,
the compressed portion is provided between the first skin layer and the second skin layer at the end face, and
an inclination angle of the end face is greater than or equal to 70 degrees.

2. The board according to claim 1, wherein
the cells arranged along the side edge form cell rows,
the core layer includes cells in a first row, cells in a second row, and cells in a third row arranged in order from the side edge toward an inner side in a direction intersecting the side edge,
the cells in the first row and the second row are compressed, and
the cells in the third row are not compressed.

3. The board according to claim 1 or 2, wherein a steel plate is disposed between at least one of the first surface or the second surface of the core layer and the skin layer facing the at least one surface.

4. The board according to claim 3, wherein
the at least one skin layer has a flat part and a curved portion having an arcuate cross-section between the flat part and the end face, and
the steel plate extends along the flat part of the skin layer from a position in contact with the curved portion.

5. The board according to any one of claims 1 to 4, wherein the first skin layer or the second skin layer is made of a nonwoven fabric.

6. The board according to any one of claims 1 to 5, wherein
the board comprises at least one corner portion where the two side edges intersect, and
the corner portion has a flat portion in which a thickness is thinner than the side edge, or a length of the compressed portion is longer than the side edge in a direction intersecting the side edge.

7. A polygonal plate-shaped board comprising:
a core layer including a foam or a hollow body with a plurality of cells; and
two skin layers stacked on opposite surfaces of the core layer, wherein
the board comprises a plurality of side edges including a compressed portion in which the core layer is compressed in a thickness direction, an end face formed by bending one of the two skin layers toward the other skin layer at each of the side edges, and a corner portion where the two side edges intersect,
the compressed portion is provided between the two skin layers at the end face, and
the corner portion includes a flat portion in which the compressed portion is formed wider than a portion of the side edge excluding the corner portion.

8. A polygonal plate-shaped board comprising:
a core layer including a foam or a hollow body with a plurality of cells; and
two skin layers stacked on opposite surfaces of the core layer, wherein
the board comprises a plurality of side edges including a compressed portion in which the core layer is compressed in a thickness direction, an end face formed by bending one of the two skin layers toward the other skin layer at each side edge, and a corner portion where the two side edges intersect,
the corner portion includes a flat portion in which a thickness is thinner than a portion of the side edge excluding the corner portion, and
the flat portion is formed by compressing the core layer and at least one of the two skin layers in a thickness direction.

9. The board according to any one of claims 6 to 8, wherein
the corner portion further has a slope that continues to an inner end of the flat portion, and
the slope extends obliquely with respect to opposite surfaces of the board.

10. The board according to claim 9, wherein an area of the slope is wider than an area of the flat portion.

11. The board according to any one of claims 6 to 10, wherein an end edge of the flat portion is formed in a curved shape.
